# EUROPEAN PATENT APPLICATION

(11) **EP 1 791 335 A2**
(43) Date of publication of application: **30.05.2007**
(21) Application number: 06024456.3
(22) Date of filing: 24.11.2006
(51) Int. Cl.: H04M 1/60, H04M 1/05, H04B 1/38, H04M 1/725

(54) **Wireless headset and control method thereof**

(30) Priority: 28.11.2005 KR 20050113925; 25.01.2006 KR 20060007558; 25.01.2006 KR 20060007559
(71) Applicant: Simplebe Co., Ltd., Dongan-gu Anyang-si , Gyeonggi-do (KR)
(72) Inventor: Lee, Young-Soon, Saha-gu Busan (KR)
(74) Representative: TER MEER - STEINMEISTER & PARTNER GbR

(57) **Abstract**

The invention relates to a wireless headset including: an elongated bar-shaped body; an earphone rotatably arranged at an upper or lower end of the body; and an earphone location guide structure for maintaining the earphone stationary with respect to the body in at least one position selected from the group consisting of an extracted position, a retracted position and an intermediate position between the extracted and retracted position. The wireless headset can enhance operational stability, saves manufacturing costs, be easily carried, and be used more conveniently. Also, the wireless headset can be automatically turned on/off in response to the extraction/retraction of the earphone.

## Description

### BACKGROUND OF THE INVENTION

### Field of the Invention

The present invention relates to a wireless headset, in particular, which is separated from a main body for transmitting/receiving wireless signals, and designed to convert a wireless signal received from the main body into a sound wave, such that a user is not restricted by lines but can use both hands freely while listening via the headset. The invention also relates to a control method of the same wireless headset.

### Description of the Prior Art

As generally known in the art,

Recently, separate wireless headsets have been used as accessories for electronic devices functioning as main bodies such as a mobile phone and an MP3 player. By using such a wireless headset, a user can use an electronic device such as a mobile phone and an MP3 player without having to hold it in his/her hand. The usage of such a wireless headset has been enabled by the development of local wireless communication technologies such as Bluetooth, Wireless LAN (WLAN), Wireless Personal Area Network (WPAN) and Radio Frequency Identification (RFID).

The wireless headset is typically provided with a frame, which is shaped in a similar manner to the earflap, and made integrally to or separately from the wireless headset. The frame of the wireless headset is hung on the earflap so that the wireless headset can remain stationary at a mounting position. However, this frame is inconvenient to use since a user must attach the headset through a complicated operation. For example, the user must hook the frame around his/her ear or deform the frame, and it is not easy at all to attach the wireless headset in a correct position. Furthermore, the frame increases the overall size of the wireless headset, and due to its hook-like configuration, is frequently caught by other objects, such as a pocket.

To overcome such problems, an approach has been introduced in which a wireless headset is attached to the ear by inserting an earphone into the external auditory canal without having to be hooked around the earflap. In this case, a user can attach the wireless headset by inserting the earphone of the wireless headset to be directly placed in a gap between the tragus and the antitragus, and within an inner space of the external auditory canal.

A prior art of the wireless headset has been proposed in Korean Registered Utility Model No. 20-0393227. According to this document, the wireless headset is directly hung on the ear of the user, and the earphone is designed to project out of the body of the wireless headset when the wireless headset is in use but to retract into a space in a central portion of the headset body when the wireless headset is stored.

However, this approach has a drawback in that the wireless headset has a limited inner space for components. In other words, since a large opening is needed in a central portion of the wireless headset to ensure space for the earphone, other components necessary for the operation of the wireless headset must be placed in other areas out of the opening. As a result, the wireless headset needs to be increased in size to be equipped with all the necessary components.

In addition, since an elongated earset is directly connected to the earphone and rotated via a hinge, the outer end of the earset protrudes outward when the wireless headset is attached to the user. When the protruded end of the earset is caught by other objects, the wireless headset is separated from the ear.

Furthermore, since a torsion spring applies a one-sided force to the earphone constantly, the earphone is likely to be pushed outward by even a weak external impact. Therefore, the wireless headset can rarely afford normal operation.

In addition, since the earphone is placed inside the body, it is difficult to extract and retract the earphone from/into the body.

Moreover, there is an inconvenience that the on/off button must be pushed to operate the wireless headset at every conversation, in addition to the extraction of the earphone.

### SUMMARY OF THE INVENTION

Accordingly, the present invention has been made to solve the above-mentioned problems occurring in the prior art, and an object of the present invention is to provide a wireless headset which can operate stably and normally, be reduced in size and manufacturing cost, stably maintain its given shape and structure even when an external impact is applied thereto, and be easily carried and used more conveniently by a user.

Another object of the invention is to provide a wireless headset which can be stably attached to an ear, stably maintain its given shape and structure in a given position even when an external impact is applied thereto, be reduced in size and manufacturing cost, and be manufactured simply, be easily carried by a user, be operated merely by extracting an earphone without having to perform additional manipulation, and in which an earphone has a shape protruding from a body to thereby be extracted more easily, and the power of the headset is controlled merely through the extraction/retraction of the earphone.

A further object of the invention is to provide a wireless headset which can be stably attached to an ear of a user while remaining stationary in extracted and/or retracted positions of an earphone, thereby improving portability, storage and usability of the wireless headset, and in which stationary positions of the earphone are provided at various angles so that the user can select a stationary position according to his/her preference.

According to an aspect of the invention, there is provided a wireless headset comprising: an elongated bar-shaped body; an earphone rotatably arranged at an upper or lower end of the body; and an earphone location guide structure for maintaining the earphone stationary with respect to the body in at least one position selected from the group consisting of an extracted position, a retracted position and an intermediate position between the extracted and retracted position.

According to another aspect of the invention, there is provided a wireless headset comprising: a body; an earphone guide recess depressed into the body from outside; an earphone arranged in the earphone guide recess, rotatably in a direction to be folded with respect to the body, so as to be extracted out; an earphone location guide structure for maintaining the earphone stationary in at least one of a position extracted from the body and another position retracted into the body; and a spacer for enabling the earphone to remain separated from the body in the extracted position.

According to yet another aspect of the invention, there is provided a wireless headset comprising: a bar-shaped body; an earphone guide recess depressed into the body from outside; an earphone placed in the earphone guide recess; an elastic hinge arranged at a joint between the earphone and the body to provide an elastic force to a rotating position of the earphone, thereby keeping the earphone stationary in an extracted position at least; and a spacer for enabling the earphone to remain separated from the body in the extracted position.

According to another aspect of the invention, there is provided a wireless headset comprising: a body; an earphone rotatable with respect to the body, so as to be extracted out; an earphone location guide structure for maintaining the earphone stationary with respect to the body; and a clip coupled with the body, for enabling the body to be hung.

According to still another aspect of the invention, there is provided a wireless headset comprising: a body; an earphone guide recess depressed into the body; an earphone arranged in the earphone guide recess, rotatably in a direction to be folded with respect to the body, so as to be extracted out; a spacer for enabling the earphone to remain separated from the body in the extracted position; a rotating shaft arranged at an end of the spacer; a rotation guide rotatable together with the rotating shaft, the rotation guide having a polygonal cross section including at least one planar portion; and an elastic member for providing an elastic force to rotate the rotation guide in a direction to be in surface contact with the planar portion of the rotation guide.

According to another aspect of the invention, there is provided a wireless headset comprising: a body; an earphone guide recess depressed into the body; an earphone arranged in the earphone guide recess, rotatably with respect to the body, so as to be extracted out; a spacer for enabling the earphone to remain separated from the body in an extracted position; a rotating shaft arranged at an end of the spacer; a guide plate rotating at the same angle as the rotating shaft; at least one stopper arranged equidistantly with a center of the guide plate; an insert piece for being selectively caught by the stoppers; and an elastic member for pressing the insert piece toward the stopper.

According to yet another aspect of the invention, there is provided a wireless headset comprising: a body; an earphone guide recess depressed into the body; an earphone arranged in the earphone guide recess, rotatably with respect to the body, so as to be extracted out; a spacer for enabling the earphone to remain separated from the body in an extracted position; a rotating shaft rotatable together with the spacer; a rotation guide having at least one planar portion rotatable together with the rotating shaft; and an elastic piece made of resin and provided integrally with a part of the body, the elastic piece providing an elastic force to rotate the rotation guide in a direction to be in surface contact with the planar portion of the rotation guide.

According to another aspect of the invention, there is provided a wireless headset comprising: a body; an earphone guide recess depressed into the body; an earphone arranged in the earphone guide recess, rotatably with respect to the body, so as to be extracted out; a spacer for enabling the earphone in an extracted position to remain separated from the body; and a flexible portion made of an elastic material, the flexible portion formed at a joint between the earphone and the body, wherein the flexible portion is smoothly curved to guide extraction of the earphone when the earphone is extracted.

According to still another aspect of the invention, there is provided a wireless headset comprising: a bar-shaped body; an earphone rotatable in a direction crossing a longitudinal direction of the body; a spacer arranged at a joint between the earphone and the body, the spacer enabling the earphone in an extracted position to maintain separation from the body; and an earphone location guide structure for maintaining the earphone stationary in the extracted position at least.

According to another aspect of the invention, there is provided a wireless headset comprising: a body; an earphone rotatable with respect to the body, so as to be extracted out; a spacer for enabling the earphone to remain separated from the body in an extracted position; and an elastic hinge for enabling the earphone to rotate in a range of 180° and to remain stationary in the extracted position at least.

According to yet another aspect of the invention, there is provided a wireless headset comprising: a bar-shaped body; an earphone guide recess formed in a cross section corner of the body; an earphone received in the earphone guide recess; a spacer connected to a joint between the earphone and the body, the spacer enabling the earphone to remain separated from the body in an extracted position; and an earphone location guide structure for maintaining the earphone stationary in the extracted position.

According to another aspect of the invention, there is provided a wireless headset comprising: a body mounted with a Bluetooth module at least; an earphone guide recess depressed into the body from outside; an earphone partially guided and placed inside the earphone guide recess; and an earphone location guide structure for maintaining the earphone stationary with respect to the body in at least one of an extracted position and a retracted position, wherein the earphone guide recess supports the earphone to prevent the earphone from excessive rotation.

According to still another aspect of the invention, there is provided a wireless headset comprising: a body; an earphone rotatable with respect to the body, and extractable perpendicularly or horizontally with respect to a longitudinal direction of the body; an earphone location guide structure for maintaining the earphone stationary in at least one of a position extracted from the body and another position retracted into the body; and a rotation detector for detecting an operation of at least one of the earphone and the earphone location guide structure to control power supplied to the wireless headset.

According to another aspect of the invention, there is provided a wireless headset comprising: a body; an earphone having a shape protruded from an end of the body, and arranged rotatably with respect to the body; a spacer for enabling the earphone in an extracted position to remain separated from the body; a stopper arranged at the spacer, and enabling the earphone in at least one of the extracted position and a retracted position to remain stationary; a support for interacting with the stopper to support the stopper in order to maintain the earphone stationary in at least one of the extracted position and the retracted position; an extraction/retraction operator for removing a supporting force from the support, which supports the earphone in at least one of the extracted position and the retracted position, to return the earphone from the extracted position or the retracted position to the retracted position or the extracted position; and a stopper-side elastic member arranged at a joint between the earphone and the body to provide an elastic force to a rotating position of the earphone in order to return the earphone from the extracted position or the retracted position to the retracted position or the extracted position.

According to yet another aspect of the invention, there is provided a wireless headset comprising: a body; an earphone rotatable perpendicular to a longitudinal direction of the body; a spacer for enabling the earphone to remain separated from the body in a retracted position; a rotating shaft arranged at an end of the spacer; a rotation guide rotatable together with the rotating shaft, and having a polygonal cross section including at least one planar portion; and an elastic member for providing an elastic force to rotate the rotation guide in a direction to be in surface contact with the planar portion of the rotation guide.

According to still another aspect of the invention, there is provided a wireless headset comprising: a body; an earphone rotatable with respect to the body; a spacer arranged between the earphone and the body, the spacer enabling the earphone in the extracted position to have a longer distance from the body than in the retracted position; a rotator connected to the earphone to rotated together with the earphone; a flexible portion connected to the rotator, and having at least two indentations; and a rotation stopper for interacting with the flexible portion to maintain the earphone stationary while the earphone is being used in order to prevent rotation of the rotator.

According to another aspect of the invention, there is provided a wireless headset comprising: a body; an earphone movable with respect to the body; a spacer for enabling the earphone to remain separated from the body in an extracted position; a rotating shaft connected to the earphone to move together with the earphone; a flexible portion having a protrusion-indentation structure, and formed on one side of the rotating shaft, a protruded rotation stopper for meshing with the protrusion-indentation structure of the flexible portion to prevent rotation of the rotating shaft; and an elastic member for providing the rotation stopper with an elastic force toward the flexible portion.

According to yet another aspect of the invention, there is provided a wireless headset comprising: a body; an earphone movable with respect to the body; a spacer for enabling the earphone to remain separated from the body in an extracted position; a rotating shaft connected to the earphone to rotate together with the earphone; a flexible portion shaped into a gear, and arranged at a portion of the rotating shaft; a ratchet for meshing with the gear of the flexible portion to prevent rotation of the rotating shaft; a ratchet shaft for supporting the ratchet; and an elastic member for providing an elastic force to a rotating position of the ratchet.

According to still another aspect of the invention, there is provided a wireless headset comprising: a body; an earphone movable with respect to the body; a spacer for enabling the earphone to remain separated from the body in an extracted position; a rotating shaft connected to the earphone to move together with the earphone; a non-circular flexible portion formed on one side of the rotating shaft, and having at least two indentations; a rotation stopper meshed with at least one of the indentations to prevent rotation of the rotating shaft; and an elastic member for providing an elastic force so that the rotation stopper maintains an initial position.

According to yet another aspect of the invention there is provided a control method of a wireless headset, comprising steps of: at an earphone, being extracted; detecting the extraction of the earphone to activate a rotation detector; and switching the wireless headset to a connection mode by the rotation detector.

According to still another aspect of the invention, there is provided a control method of a wireless headset, comprising steps of: at an earphone, being retracted; detecting the retraction of the earphone to activate a rotation detector; and switching the wireless headset to a standby mode by the rotation detector.

According to the present invention as proposed above, the wireless headset can be enhanced in operational stability, save manufacturing cost, be easily carried, and be used more conveniently.

Furthermore, the wireless headset can be automatically turned on/off in response to the extraction/retraction of the earphone, and thus used conveniently.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating a wireless headset of the invention;
FIG. 2 is a cross-sectional view taken along the line II-II' in FIG. 1;
FIG. 3 is a cross-sectional view taken along the line I-I' in FIG. 1;
FIGS. 4 and 5 are cross-sectional views illustrating retracting/extracting operations of an earphone into/from a wireless headset according to a first embodiment of the invention, in which FIG. 4 shows a position during the retraction/extraction of the earphone, and FIG. 5 shows an extracted position;
FIG. 6 is a view illustrating the angle and offset of the wireless headset according to the first embodiment of the invention;
FIGS. 7 and 8 are vertical cross-sectional views illustrating a wireless headset according to a second embodiment of the invention;
FIGS. 9 and 10 are vertical cross-sectional views illustrating a wireless headset according to a third embodiment of the invention;
FIGS. 11 and 12 are vertical cross-sectional views illustrating a wireless headset according to a fourth embodiment of the invention;
FIGS. 13 and 14 are vertical cross-sectional views illustrating a wireless headset according to a fifth embodiment of the invention;
FIG. 15 is a vertical cross-sectional view illustrating a wireless headset according to a sixth embodiment of the invention;
FIG. 16 is a perspective view illustrating the wireless headset according to the sixth embodiment of the invention;
FIG. 17 is a plan view illustrating the wireless headset according to the sixth embodiment of the invention;
FIG. 18 is a perspective view illustrating a wireless headset according to a seventh embodiment of the invention;
FIG. 19 is a cross-sectional view of a wireless headset according to an eighth embodiment of the invention, taken along the line II-II' of FIG. 1;
FIG. 20 is a cross-sectional view of the wireless headset according to the eighth embodiment of the invention, taken along the line I-I' of FIG. 1;
FIGS. 21 and 22 are cross-sectional views illustrating retracting/extracting operations of an earphone into/from the wireless headset according to the eighth embodiment of the invention, in which FIG. 21 shows a position during the retraction/extraction of the earphone, and FIG. 22 shows an extracted position;
FIG. 23 is a block diagram illustrating a switch of the wireless headset according to the eighth embodiment of the invention;
FIG. 24 is a block diagram illustrating operation modes of the wireless headset according to the eighth embodiment of the invention;
FIGS. 25 to 27 are vertical cross-sectional views illustrating a wireless headset according to a ninth embodiment of the invention;
FIG. 28 is a perspective view illustrating a wireless headset according to a tenth embodiment of the invention;
FIG. 29 is a vertical cross-sectional view illustrating the wireless headset according to the tenth embodiment of the invention;
FIG. 30 is a plan view illustrating the wireless headset according to the tenth embodiment of the invention;
FIG. 31 is a cross-sectional view of a wireless headset according to an eleventh embodiment of the invention, taken along the line II-II' of FIG. 1;
FIG. 32 is a cross-sectional view of the wireless headset according to the eleventh embodiment of the invention, taken along the line I-I' of FIG. 1;
FIGS. 33 and 34 are vertical cross-sectional views illustrating a wireless headset according to a twelfth embodiment of the invention;
FIGS. 35 and 36 are vertical cross-sectional views illustrating a wireless headset according to a thirteenth embodiment of the invention; and
FIGS. 37 and 38 are vertical cross-sectional views illustrating a wireless headset according to a fourteenth embodiment of the invention.

### DETAILED DESCRIPTION OF THE PREFERRED EMBODIMENTS

Hereinafter preferred embodiments of the present invention will be described in detail with reference to the accompanying drawings. However, these embodiments are provided for illustrative purposes and the principle of the invention is not limited thereto. Rather, those skilled in the art will appreciate that various additions, modifications, cancellations and substitutions are possible without departing from the scope and spirit of the invention as disclosed in the accompanying claims.

### Embodiment 1

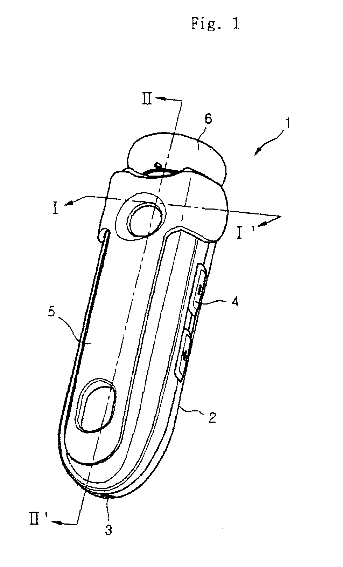

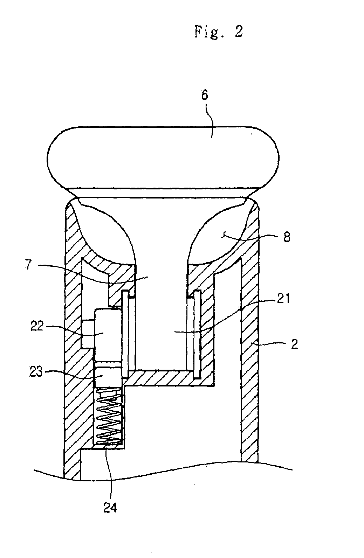

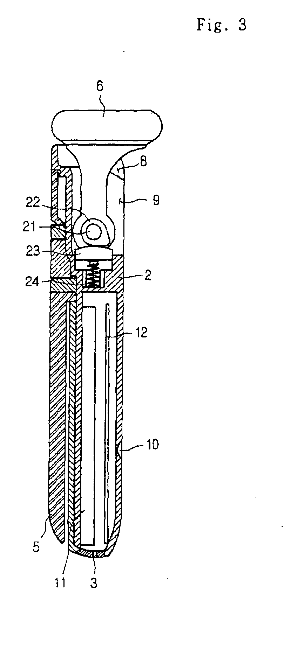

FIG. 1 is a perspective view illustrating a wireless headset 1 of the invention, FIG. 2 is a. cross-sectional view taken along the line II-II' in FIG. 1, and FIG. 3 is a cross-sectional view taken along the line I-I' in FIG. 1.

Referring to FIGS. 1 to 3, the wireless headset 1 of the invention includes a body 2 in the form of an elongated bar and an earphone 6 rotatably mounted on the upper end of the body 2. A user can easily operate the wireless headset 1 by holding the body 2 with one hand and manipulating the earphone 6 with the fingers of the hand.

On the exterior of the body 2, the headset 1 also includes a volume controller 4 by which the user can control volume, a clip 5 for allowing the user to easily attach the wireless headset 1, a microphone 3 for converting the user's voice into electric signals and an on/off button 10 used for powering on/off the wireless headset 1. In addition, a charging terminal (not shown) for charging a battery 11 may be provided at one part of the body 2.

Inside the body 2, there are installed a Bluetooth module for wirelessly communicating with a main body such as an MP3 player or a mobile phone, an amplifier circuit for amplifying signals to be transmitted/received by the Bluetooth module, and a circuit for reproducing the amplified signals into electric signals of sound waves. Of course, these elements function to operate the wireless headset 1. These elements or circuits are preferably provided on a board 12 arranged inside the body 2.

In addition, a speaker (not shown) for reproducing electric signals into audio signals through the vibration of air is installed inside the earphone 6. The earphone 6 has an insert member made of a soft material at one end thereof. The insert member is deformed flexibly when inserted into an ear of the user, and thus can stably maintain its inserted position. Accordingly, the earphone 6 with the insert member does not need any shape or frame configured similar to the earflap that serves to hold the wireless headset on the ear.

With such a structure, the user can conveniently operate the wireless headset 1 by holding the body 2 with one hand and manipulating the earphone 6 with a finger of the hand holding the body 2. That is, the earphone 6, shaped to protrude from the body 2, further facilitates the operation of the wireless headset 1.

As one of characteristic features of the wireless headset 1 of the invention, the earphone 6 can be moved easily, and constructions associated therewith will now be described in detail.

A bar-shaped spacer 7 is arranged at a joint between the earphone 6 and the body 2 to provide a specific magnitude of gap between the earphone 6 and the body 2. The body 2 has an earphone guide recess 8 for guiding the location of the earphone 6 and a spacer guide recess 9 for guiding the location of the spacer 7.

In detail, when the earphone 6 is extracted outward from the wireless headset 1 to be inserted into the ear of the user during the use of the wireless headset 1, the spacer 7 serves to prevent the earphone 6 from being caught by the ear of the user, which obstructs the insertion of the earphone 6 otherwise. That is, the spacer 7 maintains a specific gap between the ear of the user and the body 2 so that the wireless headset 1 is not caught by the user's ear. In addition, the earphone guide recess 8 is depressed in a large width into the body 2 from the end thereof to provide a seating space for the earphone 6 which is retracted to a position adjacent to the body 2 in a parking position of the wireless headset 1. The spacer guide recess 9 serves to guide the movement of the spacer 7 while the earphone 6 is extracted from the body 2 for the use of the wireless headset 1 or after the earphone is extracted.

While it is shown in the drawings that a large part of the head of the earphone 6 protrudes out of the earphone guide recess 8, the principle of the invention is not limited thereto. Most of the earphone 6 may be received inside the earphone guide recess 8. As an alternative, it is preferable that at least a portion of the earphone 6 is exposed out of the earphone guide recess 8 so that the user can easily extract and operate the earphone 6. As the earphone 6 is provided at the end of the bar-shaped body 2, the user can easily extract the earphone 6 by a sense of touch without having to see the earphone 6 to put the headset 1 into an operating position.

The earphone 6 is pivotal with respect to the body 2. The hingeable earphone 6 is correctly guided to the seating position in the earphone guide recess 8 and to the extracted position exposed to the outside.

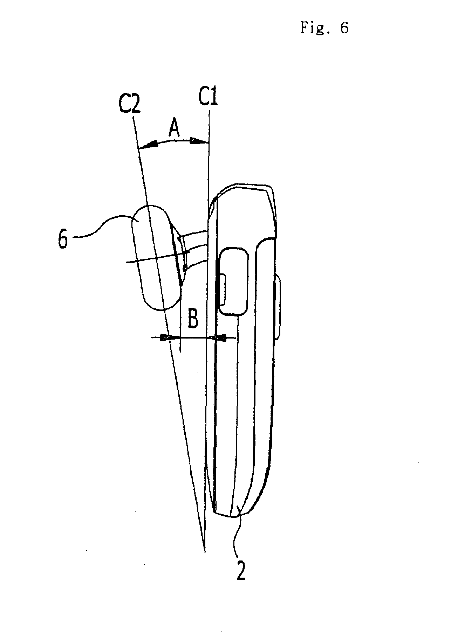

The earphone 6 is rotated with respect to the body 2 to a position shown in FIG. 6. In this position, the center line C2 of the earphone 6 is tilted with respect to the extension line C1 of the upper surface of the body 2. The angle A between the extension line C1 and the center line C2 is in the range from 5° to 20°, preferably from 10° to 15°. When the earphone 6 rotated about the body 2 is fixed, the offset B between the underside of the earphone 6 and the upper surface of the body 2 is about 2 mm to 8 mm, preferably 4 mm to 5 mm. FIG. 6 illustrates the angle and offset of the wireless headset according to the first embodiment of the invention.

Now a structure for guiding the location of the earphone 6 will be described in detail.

First, a rotating shaft 21 is provided at the lower end of the spacer 7, extended perpendicular to the longitudinal direction of the spacer 7, and a cam 22 is formed at the end of the rotating shaft 21. A stud 23 is arranged to contact the cam 22, and an elastic member 24 is connected to one end of the stud 23 which faces away from the cam 22.

With this structure, the elastic member 24 constantly applies upward force to the stud 23 which is in constant contact with the cam 22 so that the upper end of the stud 23 imparts force to the cam 22, thereby positioning the cam 22 at a specific rotation angel. Accordingly, the cam 22 is rotated via the rotating shaft 21 when the earphone 6 is rotated. The cam 22 is made in a non-circular configuration, and pushed upward by the stud 23 to impart force to the earphone 6 so that the earphone 6 is always moved to a preset location. The earphone 6 remains stable through the interaction between the cam 22 and the stud 23 in specific positions. In one position, the earphone 6 is received in the earphone guide recess 8 with the wireless headset 1 in use. In another position, the earphone 6 is extracted out completely with the wireless headset 1 not in use. In an intermediate position, the cam 22 is put into an unstable position and thus provides a force to rotate in either direction.

Owing to the location guide structure for the earphone 6, when the wireless headset 1 is not operating, that is, when the earphone 6 is received inside the earphone guide recess 8, the interaction between the cam 22 and the stud 23 prevents the earphone 6 from being extracted out until a specific magnitude of external force is applied to the earphone 6. As a result, this may advantageously prevent the earphone 6 from being extracted under external impact when the wireless headset 1 is contained in a pocket or bag. This structure may also improve sanitary conditions and the convenience to the user of the earphone 6 and the operational stability of the wireless headset 1.

When the earphone 6 and the spacer 7 are turned back toward the extracted position by the earphone location guide structure, the earphone guide recess 8 and/or the spacer guide recess 9 may function to guide the earphone 6 and the spacer 7 and stop them in a correct position without being pushed backward further.

The operation or function of the invention will be described in more detail with reference to the above-mentioned structure.

First, the parking position of the wireless headset 1 will be described in principle. Typically, the wireless headset 1 is carried by the user like a mobile phone, and preferably located in a position where the user can reach the headset 1 at any time. For this purpose, a clip 5 is provided at a side of the body 2 of the wireless headset 1, and fixed to the body 2 as a separate piece. The clip 5 has a shape extending from one end to the other of the body 2, and itself is flexible to a specific degree. Therefore, the user can easily hang the wireless headset 1 on a shirt pocket by using the clip 5. When using the wireless headset 1 to answer a call onto the mobile phone, the user can easily take the wireless headset 1 out of the pocket.

Of course, the clip 5 shown in the drawings is merely an embodiment but can be provided in various forms. For example, the clip 5 may be provided integrally with the body 2.

The usage of the clip 5 is further enhanced when the wireless headset 1 of this invention is shaped as a bar. When the wireless headset 1 is shaped as, for example, a pen, the clip 5 can enable the wireless headset 1 to be hung on a pocket, thereby further improving the usage thereof.

Furthermore, in a parking position of the wireless headset 1, the earphone 6 is received in the body 2, more particularly, seated inside the earphone guide recess 8. Since the earphone 6 is arranged along the longitudinal direction of the wireless headset 1, there is an advantage in that the earphone 6 is not interfered with by external objects. Furthermore, even if the earphone 6 is caught by an external object, the earphone location guide structure stably supports the earphone 6 in position, thereby preventing it from being extracted outward. Due to such a stable structure, the operational stability of the wireless headset 1 is advantageously improved.

The process of using the wireless headset 1 will be described in more detail.

When using the wireless headset 1 to answer a call to the mobile phone, the user separates the clip 5 to pull, out the wireless headset 1 and rotates the earphone 6 to extract it. To describe this process in more detail, the user pushes a part of the earphone 6 protruding out of the earphone guide recess 8 with a hand holding the body 2. This rotates the earphone 6 about the rotating shaft 21, which rotates outward swiftly through the interaction between the cam 22 and the stud 23.

Since the earphone 6 can be extracted swiftly, as above, there is an advantage in that user convenience can be further improved. Once extracted out, the earphone 6 remains stationary at the extracted position under a force acting between the cam 22 and the stud 23 until the user pushes the earphone 6 inward with a force the same as that exerted for the extraction of the earphone 6. Thus, the earphone 6 can remain correctly in the extracted position without movement when inserted into the ear. As a result, the earphone 6 can be inserted into the ear precisely and conveniently.

When the earphone 6 is extracted, the spacer 7 is extended to a preset length or more so that the body 2 does not interfere with any external object such as the earflap, when the earphone 6 is inserted into the ear by the user. The inserted position of the wireless headset 1 can be maintained more securely and stably. The spacer 7 can be provided to a length suitable for the above-mentioned object. Since the spacer 7 is guided by the spacer guide recess 9, it is possible to prevent the earphone 8 from being broken by external impact. That is, since the spacer 7 and the spacer guide recess 9 conform to each other, when external impact is applied to the earphone 6, the cam 22, the rotating shaft 21 and the stud 23 can be significantly protected from the force of the impact. Of course, the extracting and retracting operations of the spacer 7 are guided by the spacer guide recess 9.

After the earphone 6 is completely extracted, the on/off button 10 can be operated to start the wireless headset 1. After the telephone call is finished, the on/off button 10 may be pushed again to terminate the operation of the wireless headset 1. During the operation, the volume may be controlled by the volume controller 4. Furthermore, after the extraction of the earphone 6, the operational status of the wireless headset 1 can be controlled by merely extracting the earphone 6 without having to operate the on/off button 10. For example, the wireless headset 1 can be automatically turned on through the detection of the earphone 6 in the extracted position. For this purpose, various sensors may be installed and used, examples of which may include a sensor for detecting the stud 23 being pressed by the cam 22 and a sensor installed inside the spacer guide recess 9 to detect the movement of the spacer 7. Such a sensor may be activated by detection of the rotation of the earphone 6 in the wireless headset 1, thereby further enhancing the usage of the wireless headset 1, where the earphone 6 is installed to be extracted and retracted from/into the same, while improving user convenience.

In order to retract the earphone 6 inward when the operation of the wireless headset 1 is terminated, the user merely rotates the earphone 6 inward. Then, an operation reverse to the extraction is carried out, and thus detailed description thereof will be omitted.

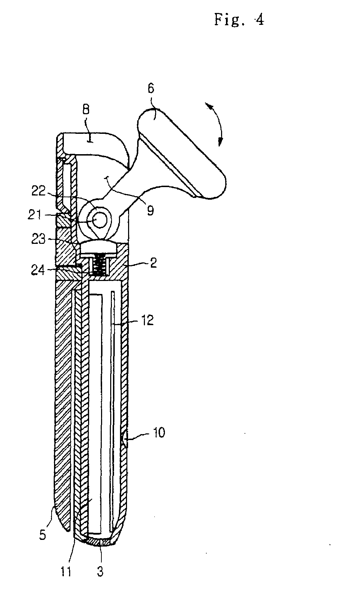

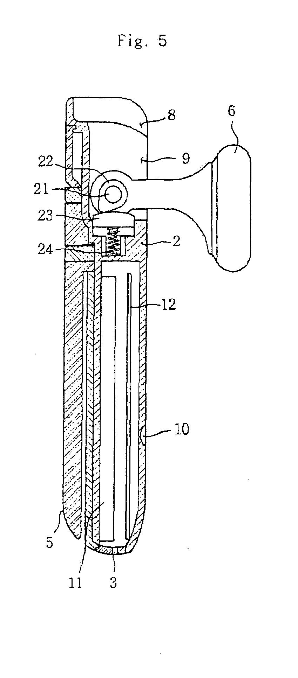

The extracting and retracting operations of the earphone 6 will be apparent with reference to FIGS. 3 to 5.

As explained briefly in the above description, the earphone 6 in the parking position is extended along the longitudinal direction of the body 2. On the other hand, in the operating position, the earphone 6 is bent with respect to the longitudinal direction of the body 2. That is, the earphone 6 is rotated from the body 2 to be folded onto the body 2. Then, the earphone 6 is moved farther away from the body 2, and as an advantageous result, the interference between the user's ear and the body 2 is reduced more still.

While not described in detail, any electrical connector structure such as a Flexible Printed Circuit Board (FPCB) may of course be provided to connect the earphone 6 with the board 12 in order to transfer electric signals to the earphone 6.

The microphone 3 is arranged in the lower part of the wireless headset 1, which is closest to the mouth of the user, in order to effectively sense the user's voice.

According to this embodiment of the invention, the earphone 6 is arranged at one end of the wireless headset 1 in an elongated pen-like shape, and configured to extend along the longitudinal direction of the headset 1 and rotate to be folded about the headset 1. This results in merits of improved structural convenience. Furthermore, since the earphone 6 is not installed in an inner space of the wireless headset 1, there are merits of improving convenience in the installation of internal components of the body 2 and promoting spatial efficiency thereof, thereby enabling the miniaturization of the wireless headset 1.

### Embodiment 2

This embodiment of the invention is substantially the same as the first embodiment except that a location guide structure for the earphone has different features. Accordingly, the same parts will not be described but understood with reference to the first embodiment. In the drawings, the like reference numerals are used to designate the like elements throughout.

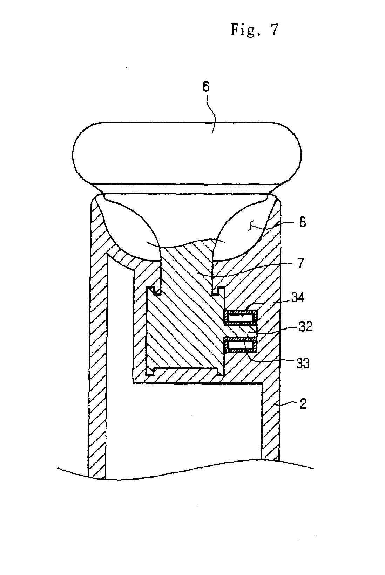

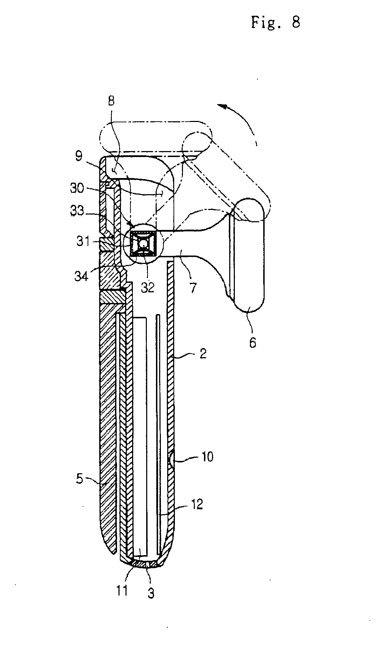

FIGS. 7 and 8 are vertical cross-sectional views illustrating the wireless headset according to the second embodiment of the invention, in which the cross section of the wireless headset is cut at the same angle as in FIGS. 2 and 3.

Referring to FIGS. 7 and 8, the earphone location guide structure of this embodiment is structured similar to a hinge structure for rotating a folder of a folder type mobile phone. The earphone location guide structure has an elastic hinge 30 at a joint between the spacer 7 and the body 2.

The structure of the elastic hinge 30 will now be described. The elastic hinge 30 of this embodiment includes a hinge body 31 forming an outside case, elastic members 34 loaded on the inside walls of the hinge body 31, a rotation guide 33 having a polygonal cross section, inserted between the elastic members 34, and a rotating shaft 32 for rotating at the same angle as the rotation guide 33 and the spacer 7.

When the earphone 6 is rotated and extracted out of the earphone guide recess 8, the rotating shaft 32 and the rotation guide 33 are rotated, in which the rotation angle of the rotation guide 33 is controlled by the elastic members 34. That is, since the rotation guide 33 is provided with a polygonal cross section including at least one plane, the elastic members 34 allow the rotating shaft 32 to rotate at an angle corresponding to the plane of the rotation guide 33. In such an operational structure, the plane corresponding to the rotation guide 33 may be preferably formed in a position opposed to the elastic members 34 at least, when the earphone 6 is completely extracted and in a position opposed to the elastic members 34 when the earphone 6 is completely retracted.

With this construction, the earphone 6 can be supported stably in the extraction and retraction positions with respect to the earphone guide recess 8 as in the first embodiment.

### Embodiment 3

The third embodiment of the invention is substantially the same as the first embodiment except that a location guide structure for the earphone has different features. Accordingly, the same parts will not be described but understood with reference to the first embodiment. In the drawings, the like reference numerals are used to designate the like elements throughout.

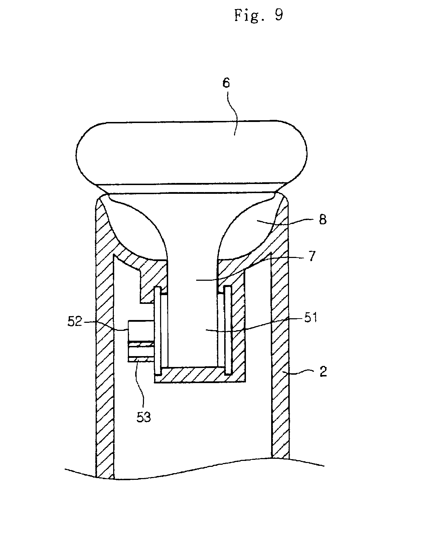

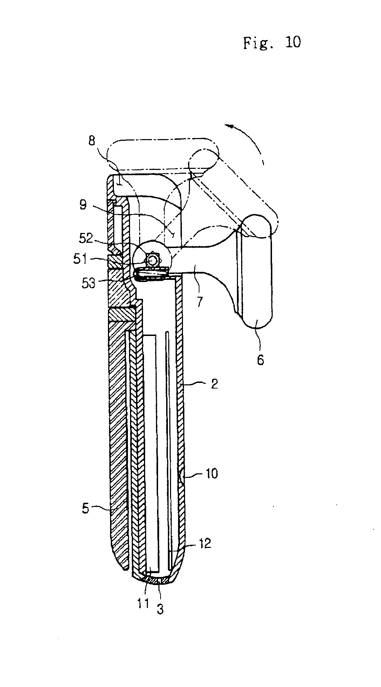

FIGS. 9 and 10 are vertical cross-sectional views illustrating a wireless headset according to the third embodiment of the invention, in which the cross section of the wireless headset is cut at the same angle as in FIGS. 2 and 3.

Referring to FIGS. 9 and 10, the earphone location guide structure of this embodiment includes an elastic hinge at a joint between the spacer 7 and the body 2.

The structure of the elastic hinge will be described in detail. The elastic hinge of this embodiment includes a rotating shaft 51 formed at the lower end of the spacer 7, a rotation guide 52 adapted to rotate with the rotating shaft 51 at the same angle, and an elastic piece 53 contacting the rotation guide 52.

To describe in more detail, the rotating shaft 51 and the rotation guide 52 are adapted to rotate at the same angle, and the rotation guide 52 has a polygonal cross section having at least one plane. The elastic piece 53 is provided integrally with a part of the body 2, and folded in at least one direction to impart a preset elastic force. When the body 2 is made of resin, the elastic piece 53 may also be made of resin to facilitate fabrication. Although the elastic member 53 may of course be made of a piece separate from the body 2 to be inserted into the body 2, it is preferable that the elastic member 53 is manufactured simultaneously with the body 2 and integrally with a part of the body 2 in order to save manufacturing cost and add convenience.

To describe this embodiment, when the earphone 6 is rotated and extracted out of the earphone guide recess 8, the rotating shaft 51 and the rotation guide 52 are rotated and the rotation angle of the rotation guide 52 is controlled by the elastic piece 53. That is, the rotation guide 52 has a cross section including at least one plane so that the elastic piece 53 rotates the rotating shaft 51 at an angle corresponding to the plane of the rotation guide 52. In such an operational structure, the plane corresponding to the rotation guide 52 may be preferably formed in a position opposed to the elastic piece 53 at least, when the earphone 6 is completely extracted and a position opposed to the elastic piece 53 when the earphone 6 is completely retracted, so that the earphone 6 is guided correctly to extracted and retracted positions.

Of course, when the rotation guide 52 is provided with at least two planes, the stationary position may be variously provided. This case can be more positively applied to a situation where the user wants the earphone 6 to be attached to an ear in various positions.

### Embodiment 4

The fourth embodiment of the invention is substantially the same as the first embodiment except that a location guide structure for the earphone has different features. Accordingly, the same parts will not be described but understood with reference to the first embodiment. In the drawings, the like reference numerals are used to designate the like elements throughout.

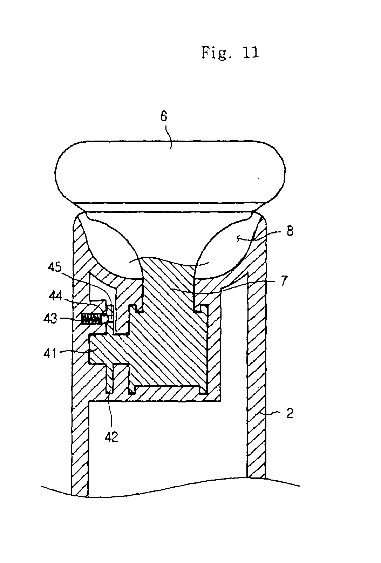

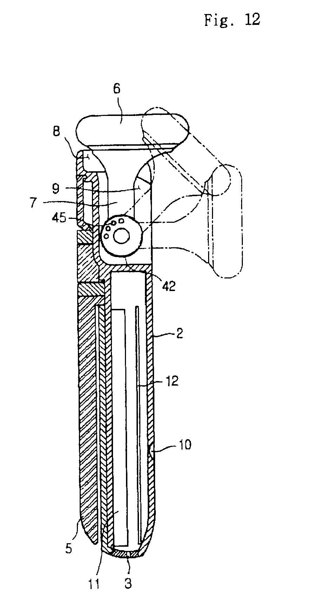

FIGS. 11 and 12 are vertical cross-sectional views illustrating a wireless headset according to the fourth embodiment of the invention, in which the cross section of the wireless headset is cut at the same angle as in FIGS. 2 and 3.

Referring to FIGS. 11 and 12, the wireless headset includes a rotating shaft 41 formed in the lower end of the spacer 7, a guide plate 42 provided at a portion of the rotating shaft 41 to rotate coaxially with the rotating shaft 41, stoppers 45 arranged radially around and distanced equally from the rotation center of the guide plate 42, an insert ball 44 for being inserted at least partially into one of the stoppers 45 to stop the rotation of the guide plate 42, and an elastic member 43 for pushing the insert ball 44 to be aligned in the stopper 45. The stoppers 45 may be provided in the form of a recess formed in the guide plate 42.

To describe the operation of this embodiment, when aligned with one of the stoppers 45, the insert ball 44 is resistant against the rotation of the stopper 45. Then, under at least a specific amount of external force, the guide plate 42 is restrained from rotating. In this position, when the earphone 6 is extracted or retracted through rotation under an external force, the rotating shaft 41 and the guide plate 42 are rotated together, and the rotation of the guide plate 42 moves the stopper 45 out of alignment with the insert ball 44. That is, as a plurality of the stoppers 45 are provided, the stoppers 45 are alternately aligned with the insert ball 44 in response to the rotation angle of the guide plate 42.

In a state where the earphone 6 is completely extracted or retracted through this operation, when the stopper 45 is provided in a position aligned with the insert ball 44, the earphone 6 can stably remain in the extracted or retracted position. Furthermore, when a plurality of the stoppers 45 are provided, it is possible to advantageously adjust the stationary position of the earphone 6 as desired by the user. In the drawings, four stoppers 45 are provided so that the user can locate the earphone 6 in four types of stationary positions.

### Embodiment 5

The fifth embodiment of the invention is substantially the same as the first embodiment except that a location guide structure for the earphone has different features. Accordingly, the same parts will not be described but understood with reference to the first embodiment. In the drawings, the like reference numerals are used to designate the like elements throughout.

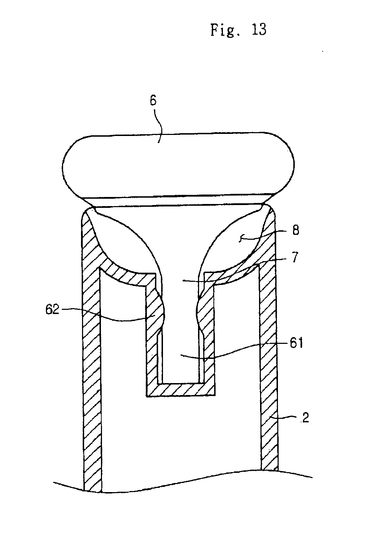

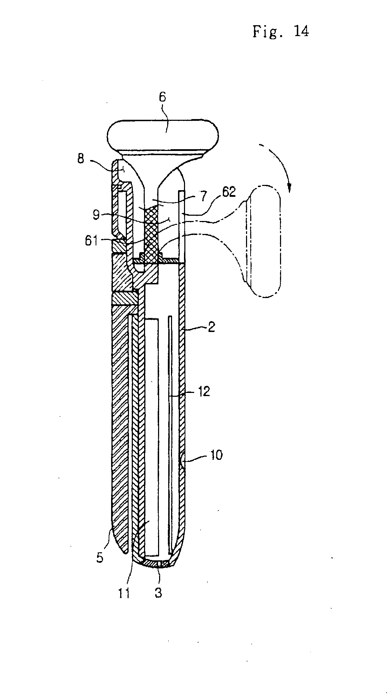

FIGS. 13 and 14 are vertical cross-sectional views illustrating a wireless headset according to a fifth embodiment of the invention, in which the cross section of the wireless headset is cut at the same angle as in FIGS. 2 and 3.

Referring to FIGS. 13 and 14, the earphone location guide structure of this embodiment includes an elastic hinge provided at a joint between the spacer 7 and the body 2 as in the first embodiment. However, according to characteristic features of this embodiment, the hinge is not provided in a specific point but a portion of the spacer 7 itself is made of an elastic material so that the spacer 7 is bent smoothly when the earphone 6 is extracted. Therefore, the rotation operation by the hinge is not carried out at a specific point.

To describe in detail, the spacer 7 of this embodiment is provided to be coupled with a component of the body 2, and includes a flexible portion 61 made of a soft material. As a result, the flexible portion 61 is smoothly rotated and bent when the earphone 6 is extracted outward.

The flexible portion 61 may be connected to the body 2 by injection molding the body 2 first and double-injection molding the flexible portion 61 onto the body 2. Alternatively, the flexible portion 61 may be inserted (or assembled) into the body 2, which has been manufactured previously. For the sake of convenience, it is preferable to manufacture the flexible portion 61 by double-injection molding.

In the meantime, protrusions 62 are formed at outer edges of the spacer guide recess 9, through reduction in the width of the recess 9. The protrusions 62 serve to guide the position of the spacer 7 after being extracted. Since the flexible portion 61 or the spacer 7 passes through the protrusions 62, the user can easily extract the spacer 7 and the earphone 6 by applying a certain amount of force to the earphone 6. Here, since the flexible portion 61 is constricted between the protrusions 62 as elastically deformed, it remains at the extracted position once extracted out. Therefore, once the user extracts the earphone 6, the earphone 6 advantageously remains in the extracted position.

Although not described in detail, the spacer 7 may be entirely made of the same material as the flexible portion 61. Alternatively, the spacer 7 may be made of a material having a certain degree of solidity unlike to the flexible portion 61. As an advantageous result obtainable when the spacer 7 is made of a somewhat solid material, the operation of inserting the earphone 6 into the ear can be carried out more easily.

### Embodiment 6

The sixth embodiment of the invention is substantially the same as the first embodiment except that the rotation direction and the rotation status of the earphone 6 have different features. Accordingly, the same parts will not be described but understood with reference to the first embodiment. In the drawings, the like reference numerals are used to designate the like elements throughout.

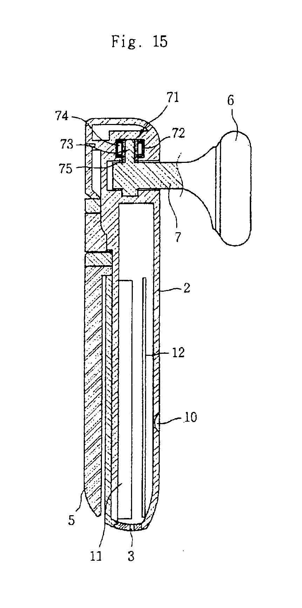

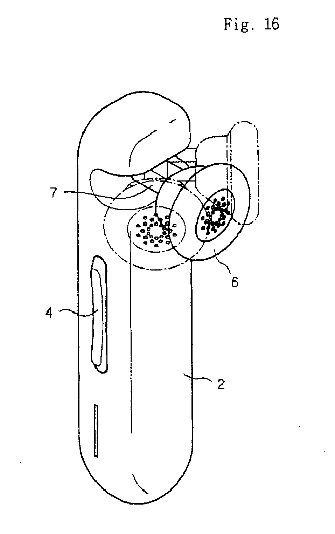

FIG. 15 is a vertical cross-sectional view illustrating a wireless headset according to a sixth embodiment of the invention, and FIG. 16 is a perspective view illustrating the wireless headset according to the sixth embodiment of the invention.

Referring to FIGS. 15 and 16, the wireless headset of this embodiment has the same characteristic features as the first embodiment in that the earphone 6 is arranged at the upper end of the wireless headset. However, the earphone 6 of this embodiment is operative to rotate on a rotation plane perpendicular to the longitudinal direction of the wireless headset. This rotation plane is formed in a horizontal direction of FIG. 15. To achieve this operational feature, the body 2 is provided with a recess formed in a horizontal direction (along the rotation plane) and a rotating shaft 73 supported in a vertical direction (parallel to the longitudinal direction of the wireless headset) in the recess.

At a joint between the spacer 7 and the body 2, the wireless headset has a structure the same as the earphone location guide structure which may be used in the folder type mobile phone as described previously in the first embodiment.

To describe this structure in detail, an elastic hinge 71 is provided at one end of the spacer 7, and the rotating shaft 73 is inserted into the elastic hinge 71, extended vertically. The structure also includes a rotation guide 75 with a polygonal cross section and adapted to rotate at the same angle as the rotating shaft 73, an elastic member 74 for maintaining a stationary position in a specific range of angle during the rotation of the rotation guide 75, and a hinge body 72 for supporting the elastic member 74 from inside.

In such a structure, the earphone 6 can be rotated for 180° in a horizontal direction, and the user can use the wireless headset by setting the earphone 6 stationary at a desired position.

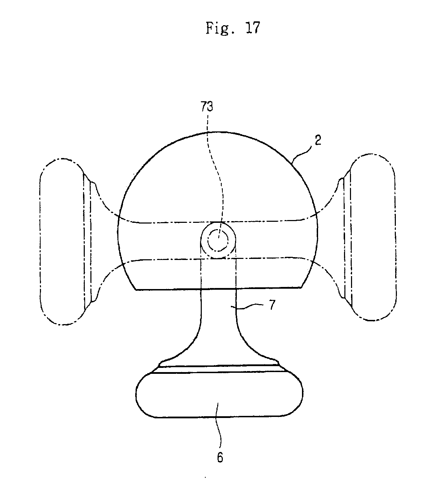

FIG. 17 is a plan view illustrating the wireless headset of this embodiment, in which the range of the rotation of the earphone 6 is illustrated. In FIG. 17, the positions where the earphone 6 is rotated to the right and left limit angles may be parking positions of the wireless headset. The position where the earphone 6 is located at the center of the rotation range may be a position where the wireless headset is used. This is because when the earphone 6 is located at the center of the rotation range, the spacer 7 is located farthest from the body 2, so that there is no fear that the body 2 touches the ear of the user.

In this embodiment also, as an advantageous effect, according to the rotation angle of the earphone 6, the earphone 6 can remain without movement in stationary positions if at least a preset amount of external force is not applied. Furthermore, when the earphone 6 is located at a rotation limit point, the gap between the spacer 7 and the body 2 is short. That is, at this gap, an external object may not easily contact the earphone 6, and thus the wireless headset can be easily carried. In addition, since the earphone 6 is arranged at one end of the bar-shaped body 2, the user can conveniently handle the wireless headset without any interference in carrying and storage.

While this embodiment has been described with the rotation angle having a limit range of 180°, the rotation angle may have various ranges that are smaller than 180°, such as 170°.

### Embodiment 7

The seventh embodiment of the invention is substantially the same as the sixth embodiment except for the range of the rotation angle of the earphone 6 and the position of a joint where the earphone 6 is connected to the body 2. Accordingly, the same parts will not be described but understood with reference to the sixth embodiment. In the drawings, the like reference numerals are used to designate the like elements throughout.

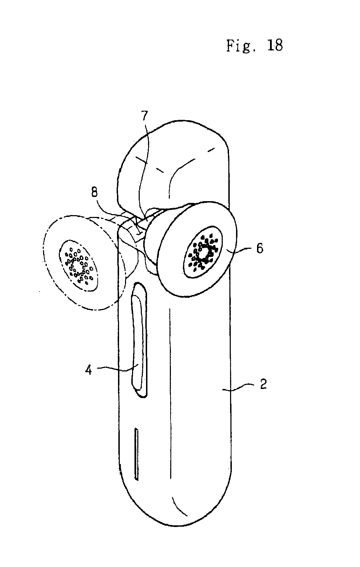

FIG. 18 is a perspective view illustrating a wireless headset of this embodiment.

Referring to FIG. 18, a joint where the spacer 7 is connected to the body 2 is a corner portion of the body 2 when seen in a cross section thereof. That is, when the body 2 is shaped into a non-circular cross section, in particular, a rectangular cross section, the joint is provided at a corner of the rectangular cross section. To receive the earphone 6 in the retraction thereof, an earphone guide recess 8 is formed in the body 2 to receive the earphone 6 in a parking position.

To describe the wireless headset of this embodiment, the earphone 6 depicted with the solid line in FIG. 18 indicates the parking position thereof, where the earphone 6 is generally received inside the body 2 and partially protruding from the body 2 so that the user can operate the earphone 6. The earphone 6 depicted with the dashed dot line indicates that it is in an operating position thereof, where the earphone 6 is spaced for a predetermined gap or more from the body 2. Then, during the use of the wireless headset, the body 2 does not interfere with the ear of the user. In addition, the joint between the spacer 7 and the body 2 is provided with an elastic hinge equal or similar to that of the sixth embodiment, and thus the guidance of the earphone 6 into stationary positions may be easily expected.

As an alternative, the joint between the spacer 7 and the body 2 may be relocated so that the dashed dot line indicates the earphone in the parking position, but the solid line indicates the earphone in the operating position. In this case, the earphone location guide recess 8 will be inserted deep into the body 2 from a side thereof about the drawing surface.

Also according to this embodiment, the earphone 6 is arranged at one end of the elongated bar-shaped body 2 so that the user can conveniently operates the earphone 6 with one hand without any interference in the storage or parking thereof.

### Embodiment 8

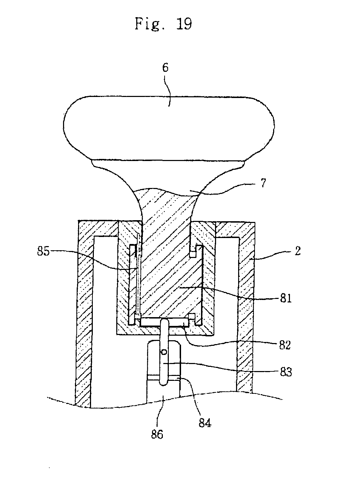

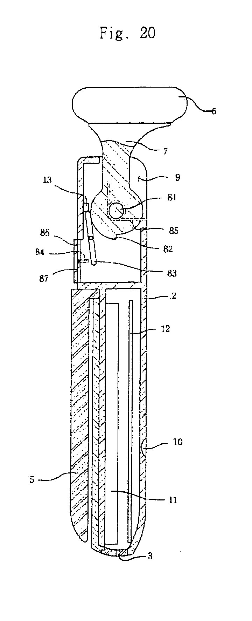

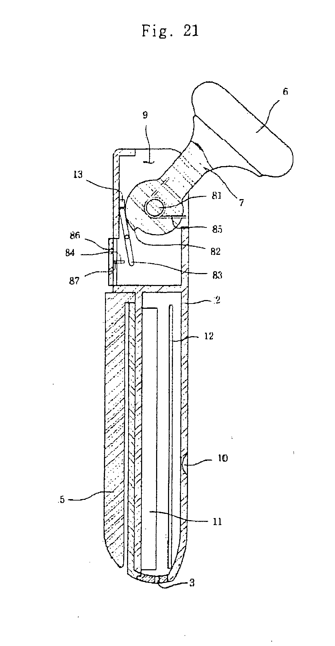

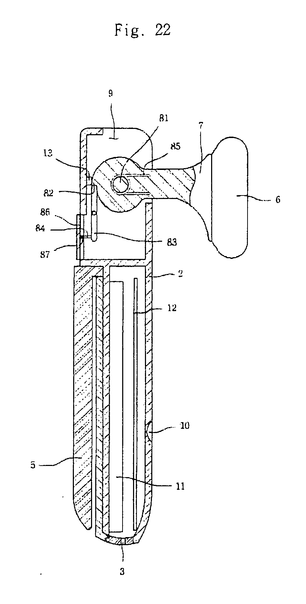

FIG. 19 is a cross-sectional view of a wireless headset according to an eighth embodiment of the invention, taken along the line II-II' of FIG. 1, and FIG. 20 is a cross-sectional view of the wireless headset according to the eighth embodiment of the invention, taken along the line I-I' of FIG. 1. FIGS. 21 and 22 are cross-sectional views illustrating retracting/extracting operations of an earphone into/from the wireless headset according to the eighth embodiment of the invention, in which FIG. 21 shows a position during the retraction/extraction of the earphone, and FIG. 22 shows an extracted position.

As a characteristic feature of the wireless headset 1 of this embodiment, the movement of the earphone is carried out conveniently, which will be described as follows with reference to an associated construction.

The wireless headset 1 includes a body 2 and an earphone 6 mounted rotatably on one end of the body 2. At a joint between the earphone 6 and the body 2, a spacer 7 is arranged to provide a specific length of gap between the earphone 6 and the body 2. The body 2 has a spacer guide recess 9 for guiding the location of the spacer 7.

To be specific, the earphone 6 protrudes from one of the upper and lower ends of the bar-shaped body, such that the user can easily extract the earphone 6 by a sense of touch without having to see the earphone 6 to put the headset 1 into an operating position. Such a protruded configuration can facilitate the miniaturization of the body 2 so that the body 2 can have a slim and compact shape.

Referring to FIG. 6 again, the earphone 6 is rotated to a stationary position with respect to the body 2. In this position, the center line C2 of the earphone 6 is tilted with respect to the extension line C1 of the upper surface of the body 2. The angle A between the extension line C1 and the center line C2 is in the range from 5° to 20°, preferably from 10° to 15°. When the earphone 6 rotated about the body 2 is fixed, the offset B between the underside of the earphone 6 and the upper surface of the body 2 is about 2 mm to 8 mm, preferably 4 mm to 5 mm.

To be specific, when the earphone 6 is extracted from the wireless headset 1 to be inserted into the ear of the user during the use of the wireless headset 1, the spacer 7 serves to prevent the earphone 6 from being caught by the ear of the user, which obstructs the insertion of the earphone 6 otherwise. That is, the spacer 7 maintains a specific gap between the ear of the user and the body 2 so that the wireless headset 1 is not caught by the user's ear. The spacer guide recess 9 serves to guide the movement of the spacer 7 while the earphone 6 is extracted from the body 2 for the use of the wireless headset 1 or after the earphone is extracted.

Now a structure for guiding the location of the earphone 6 will be described in detail.

First, a rotating shaft 81 is provided at the lower end of the spacer 7, extended perpendicular to the longitudinal direction of the spacer 7, and a stopper 82 is arranged at the lower end of the rotating shaft 81. The rotating shaft 81 is further connected with an elastic member 85 for providing an elastic force necessary for the earphone 6 to return to the retracted position. In addition, a support 83 is provided under the stopper 82, which is supplied with an elastic force from an elastic member (not shown) to remain parallel with the longitudinal direction of the body 2.

In detail, the stopper 82 has a cross section having curves of different radii combined together and a step formed at a joint of the curves. When the earphone 6 is in the extracted position, the step is supported by the support 83 so that the earphone 6 can stably maintain the extracted position against an external force applied thereto.

The curves of the stopper 82 have a spiral shape. That is, the curves have the smallest radii at a joint to the spacer 7 but the largest radii at the step. This configuration serves to actuate a rotation detector 13 by the rotation of the stopper 82.

An extraction/retraction operator 86 is arranged at a side portion of the body 2, and an operator-side elastic member 87 is arranged between the extraction/retraction operator 86 by which the user can operate the extraction/retraction operator 86.

A protrusion 84 is connected to the extraction/retraction operator 86, and has an elongated bar-like configuration extended to the inside of the body 2 to contact the support 83. In response to the operation of the extraction/retraction operator 86, the protrusion 84 acts to move the support 83.

A rotation detector 13 is arranged between the interior of the body 2 and the stopper 82 to control power supply to the wireless headset 1 based on the extraction and/or retraction of the earphone 6.

According to such a structure, the stopper-side elastic member 85 constantly supplies a rotational force to the earphone 6 together with the spacer 7 and the rotating shaft 81 connected to the earphone 6. The rotational force is directed parallel with the body 2, that is, along the retraction of the earphone 6.

In a position where the user has completely extracted the earphone 6 from the retracted position by applying an external force, the stopper 82 is supported by the support 83 and thus can stably maintain the extracted position against any external force applied thereto.

The earphone 6 is located stably at two positions through the interaction among the stopper 82, the stopper-side elastic member 85 and the support 83. In the first position, the wireless headset 1 is not used. That is, the earphone 6 is placed collinear with the body and the spacer 7 is completely retracted into the body. In the second position, the wireless headset 1 is used. That is, the earphone 6 is completely extracted out and rotated to a position in parallel with the body.

In addition, where the earphone 6 is rotated to a position intermediate between the extracted position and the retracted position, that is, to an angle smaller than 90° with respect to the body, the earphone 6 is constantly forced into the body by the stopper-side elastic member 85. In other words, the earphone 6 is forced toward a position collinear with the body.

According to the location guide structure for the earphone, the earphone 6 is not extracted owing to the interaction among the stopper 82, the stopper-side elastic member 85 and the support 83 unless the earphone 6 is completely extracted under at least a specific amount of external force to be supported by the support 83.

As a result, this may advantageously prevent the earphone 6 from being extracted under external impact when the wireless headset 1 is contained in a pocket or bag. This structure may improve sanitary conditions and the convenience to the user of the earphone 6, and may improve the operational stability of the wireless headset 1.

The operation or function of the invention will be described in more detail with reference to the above-mentioned structure.

First, the parking position of the wireless headset 1 will be described in principal. Typically, the wireless headset 1 is carried by the user like a mobile phone, and preferably located in a position where the user can handle the headset 1 at any time. For this purpose, a clip 5 is provided at a side of the body 2 of the wireless headset 1, and fixed to the body 2 as a separate piece. The clip 5 has a shape extending from one end to the other of the body 2, and itself is flexible to a specific degree. Therefore, the user can easily hang the wireless headset 1 on a shirt pocket by using the clip 5. When using the wireless headset 1 to answer a call to the mobile phone, the user can readily take the wireless headset 1 out of a pocket.

Of course, the clip 5 shown in the drawings is merely one example, and can be provided in various forms. For example, the clip 5 may be provided integrally with the body 2.

The usage of the clip 5 is more enhanced when the wireless headset 1 of this invention is bar-shaped. When the wireless headset 1 is shaped as for example a pen, the clip 5 can enable the wireless headset 1 to be hung on the pocket, thereby further improving the usage thereof.

Furthermore, in a parking position of the wireless headset 1, the earphone 6 is received in the body 2, particularly, supported by the body 2. Since the earphone 6 may be arranged along the longitudinal direction of the wireless headset 1, there is an advantage in that the earphone 6 is not interfered with by external objects. Furthermore, even if the earphone 6 is caught by any external object, the earphone location guide structure stably supports the earphone 6 in position, thereby preventing it from being extracted outward. Due to such a stable structure, the operational stability of the wireless headset 1 is advantageously improved.

The process of using the wireless headset 1 will be described in more detail.

When using the wireless headset 1 to answer a call to the mobile phone, the user separates the clip 5 to pick up the wireless headset 1 and rotates the earphone 6 to extract out.

To describe the extracting process of the earphone in more detail, the user pushes the part of the earphone 6 protruding out of the body 2 with a hand holding the body 2. This turns the earphone 6 about the rotating shaft 21, and when the earphone 6 is pushed completely in a direction perpendicular to the body 2, the earphone 6 is supported by the support 83. That is, the earphone 6 remains stationary at the extracted position through the interaction between the stopper 82 and the support 83, even if an external force is applied thereto.

When the earphone 6 is completely extracted and remains stationary, the rotation detector 13 on the inside wall of the body 2 is activated. To be specific, the stopper 82 has a helical shape to have its longest radius at a portion opposing the joint to the spacer 7. As a result, the portion having the longest radius (hereinafter will be referred to as "largest radius portion") does not contact the rotation detector 13 in the retracted position of the earphone 6 but contacts the rotation detector 13 in the extracted position of the earphone 6. That is, when the earphone 6 is extracted, the interaction between the stopper 82 and the support 83 makes the earphone 6 remain stationary while activating the rotation detector 13 so that the wireless headset 1 starts operation.

To be specific, the rotation detector 13 may be provided with a switch, as shown in FIGS. 21 and 22, to detect the rotation of the stopper 82. When the earphone 6 is extracted and the stopper 82 touches the switch installed in the rotation detector 13, the wireless headset 1 is turned on to start operation. When the earphone 6 is retracted and the stopper 82 is separated from the switch of the rotation detector 13, the wireless headset 1 is turned off to terminate operation. In this fashion, the operation of the wireless headset 1 can be controlled.

As an alternative, a sensor may be installed in the rotation detector 13 to detect the rotation of the stopper 82. That is, based on the sensor of the rotation detector 13 detecting the retraction position of the earphone 6, the wireless headset 1 can be automatically turned on/off. For this purpose, various sensors may be installed and used, examples of which include a sensor for detecting the movement of the stopper 82 and the support 83, and a sensor installed inside the spacer guide recess 9 to detect the movement of the spacer 7. Such a sensor may be activated by detection of the rotation of the earphone 6 in the wireless headset 1, thereby further enhancing the usage of the wireless headset 1, where the earphone 6 is installed to be extracted and retracted from/into the same, while improving user convenience.

Now the process of terminating the operation of the wireless headset will be described in more detail.

To terminate the operation of the wireless headset 1 when the telephone call is finished, the earphone 6 is rotated to be retracted inward.

To describe the retracting process of the earphone 6 in more detail, the user manipulates the extraction/retraction operator 86 protruding from the body 2 by using a hand holding the body 2.

Preferably, the extraction/retraction operator 86 may be provided in the form of a button, which may be configured to return to the original position by the operator-side elastic member 87, after being operated.

When the extraction/retraction operator 86 is pushed into the body 2, the protrusion 84 connected to the extraction/retraction operator 86 interacts with the support 83, thereby separating the support 83 from a point supporting the stopper 82. When the support 83 is separated from the supporting point, a force supporting the stopper 82 is removed, such that the earphone 6 returns to the retracted position under an elastic force by the stopper-side elastic member 83.

When the earphone 6 is retracted as above, the rotation detector 13 on the inside wall of the body 2 is activated. That is, as soon as the earphone 6 returns to the retracted position by the interaction between the stopper 82 and the support 83, the rotation detector 13 is activated, thereby automatically terminating the operation of the wireless headset 1. As described above, the rotation detector 13 may adopt a switch or a sensor.

As an alternative, when the user wishes to keep the wireless headset 1 attached to the ear even after the wireless headset 1 has been turned off, he/she may manually terminate the operation of the wireless headset by manipulating the on/off button 10.

The extracting/retracting process of the earphone will be apparent with reference to FIGS. 20 to 22.

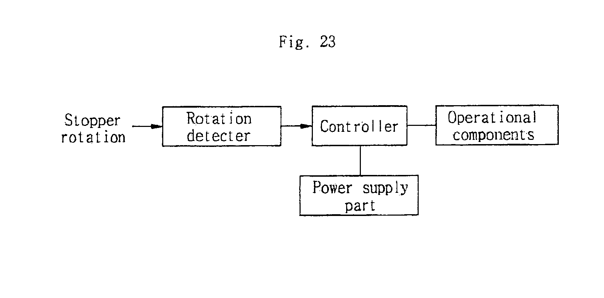

FIG. 23 is a block diagram illustrating a switch of the wireless headset according to the eighth embodiment of the invention.

With reference to FIG. 23, a power control process by the manipulation of the earphone will be described as follows.

When the user attempts to use the wireless headset 1, he/she rotates the earphone 6 to extract it. On the other hand, to terminate the operation of the wireless headset 1, the user retracts the earphone 6 inward by rotating it.

To be specific, when the user completely extracts the earphone to use the wireless headset, the stopper is rotated to turn on the switch of the rotation detector or activate the sensor of the rotation detector. Then, a signal is transferred from the rotation detector to the controller.

In response to the signal transferred to the controller, a power supply part operates to put the wireless headset into a connection mode. This also starts operational components of the wireless headset such as a microphone in charge of transmission, a speaker in charge of reception and a communication controller in charge of data transmission/reception to/from a Bluetooth main body.

When the user completely retracts the earphone to terminate the operation of the wireless headset, the stopper is rotated to separate from the switch of the rotation detector (OFF) or activate the sensor of the rotation detector. Then, a signal is transferred from the rotation detector to the controller.

In response to the signal transferred to the controller, the power supply part operates to set the wireless headset into a standby mode such that the wireless headset stops operation.

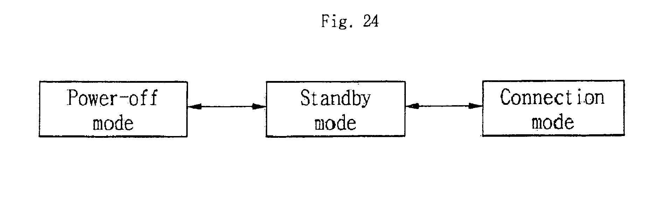

FIG. 24 is a block diagram illustrating operation modes of the wireless headset according to the eighth embodiment of the invention.

With reference to FIG. 24, the operation modes of the wireless headset will be described as follows.

The operation modes of the wireless headset can be classified generally into three modes including power-off, standby and connection modes.

In the power-off mode, the operation of the wireless headset 1 is completely terminated and no power is consumed. This is similar to a mobile phone powered off.

When the on/off button 10 is held for a while in the power off mode, the wireless headset 1 enters the standby mode. The standby mode is similar to a standby mode of a mobile phone, and when the user extracts the earphone 6 or pushes the on/off button to use the wireless headset 1, the headset 1 immediately converts to the connection mode where the wireless headset 1 is operating. In the standby mode, a minimal amount of power is consumed to maintain connection with a Bluetooth main body.

When the user extracts the earphone 6 or pushes the on/off button 10 to use the wireless headset 1 in the standby mode, the headset 1 enters the connection mode. The connection mode is similar to a communicating status of the mobile phone, where the user can transmit/receive data such as audio signals by using the wireless headset 1. In the connection mode, all operational components of the wireless headset 1 such as a microphone in charge of transmission, a speaker in charge of reception and a communication controller in charge of data transmission/reception to/from the Bluetooth main body are activated.

The conversion between the standby mode and the connection mode is enabled by the extraction/retraction of the earphone 6 or by the input of the on/off button.

As described in brief previously, the earphone 6 is extended parallel to the longitudinal direction of the body 2 in the parking position. But, in the operating position, the earphone 6 is folded or bent with respect to the longitudinal direction of the body 2 through rotation. As a result, the distance between the earphone 6 and the body 2 is further increased, and the interference between the ear of the user and the body 2 is advantageously reduced further.

Although not described in detail, any electrical connector structure such as an FPCB may of course be provided to connect the earphone 6 with the board 12 in order to transfer electric signals to the earphone 6.

The microphone 3 is arranged in the lower part of the wireless headset 1, which is closest to the mouth of the user, in order to effectively sense the user's voice.

According to this embodiment of the invention, the earphone 6 is arranged at one end of the wireless headset 1, and configured to extend along the longitudinal direction of the headset 1 and rotate to be folded about the headset 1. This results in merits of improved structural convenience. Furthermore, since the earphone 6 is not installed in an inner space of the wireless headset 1, there are merits of improving convenience in the installation of internal components of the body 2 and promoting the spatial efficiency thereof, thereby enabling the miniaturization of the wireless headset 1. Furthermore, the earphone 6 protruding from the body 2 can be easily extracted/retracted from/into the body 2. As merits, the wireless headset 1 can be further reduced in size and have a slim and compact shape. Moreover, since it is possible to automatically control power supplied to the wireless headset 6 through the extraction/retraction of the earphone 6, the user can more simply and easily use the wireless headset 6.

### Embodiment 9

This embodiment of the invention is substantially the same as the eighth embodiment except that a location guide structure for the earphone has different features. Accordingly, the same parts will not be described but understood with reference to the eighth embodiment. In the drawings, the like reference numerals are used to designate the like elements throughout.

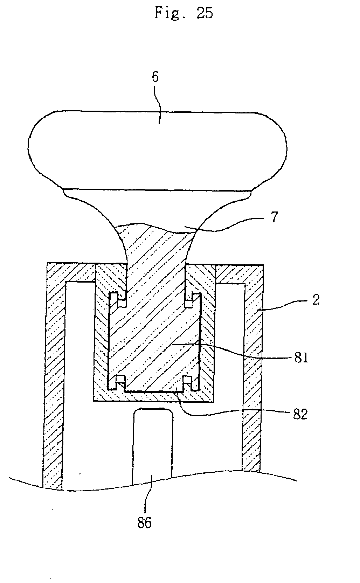

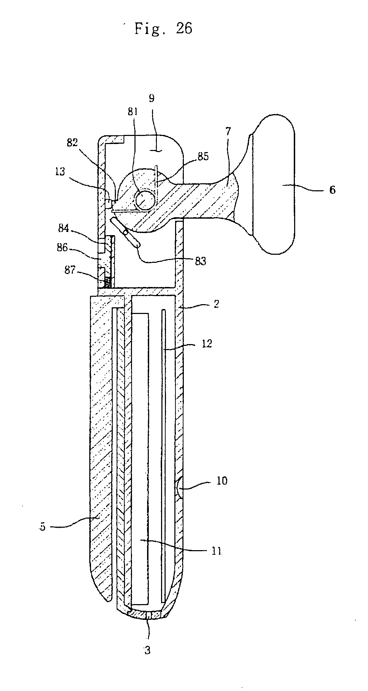

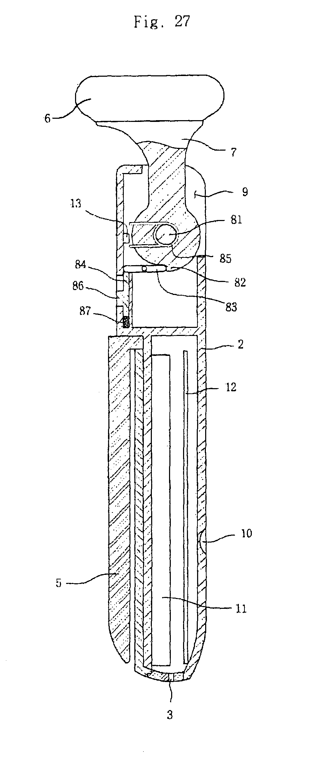

FIGS. 25 to 27 are vertical cross-sectional views illustrating the wireless headset according to the ninth embodiment of the invention.

Referring to FIGS. 25 to 27, the earphone location guide structure of this embodiment is opposite to that of the eighth embodiment. That is, the returning direction enabled by the stopper-side elastic member 85, which provides an elastic force to a rotation position of the earphone 6, is toward the extracting position rather than toward the retracting position.

That is, the earphone 6 of this embodiment is supported by the support 83 in the retracted position, but returned to the extracted position by the stopper-side elastic member 85 in response to the extraction/retraction operator 86.

To describe the process of extracting the earphone 6 to use the wireless headset 1, the user manipulates the extraction/retraction operator 86 arranged in the exterior of the body 2 with a hand holding the body 2.

Preferably, the extraction/retraction operator 86 may be provided in the form of a button, which may be configured to return to the original position after being operated, by the operator-side elastic member 87.

When the extraction/retraction operator 86 is pushed toward an upper part of the body 2, the protrusion 84 connected to the extraction/retraction operator 86 interacts with the support 83, thereby separating the support 83 from a point supporting the stopper 82. With this operation, a force supporting the stopper 82 is removed, such that the earphone 6 returns to the retracted position under an elastic force by the stopper-side elastic member 83.

Likewise to the eighth embodiment, as soon as the earphone 6 is extracted, the rotation detector 13 on the inside wall of the body 2 is activated. That is, simultaneous with the earphone 6 being extracted out, the rotation detector 13 is operated, thereby activating the wireless headset 1.

Likewise to the eighth embodiment, when the earphone 6 is completely extracted, the rotation detector 13 on the inside wall of the body 2 is activated. That is, the rotation detector 13 activates through contact with the largest radius portion of the stopper 82, thereby starting the operation of the wireless headset 1. Here, the rotation detector 13 may adopt a switch, a sensor and the like.

Now the process of terminating the operation of the wireless headset 1 will be described in more detail.

To terminate the operation of the wireless headset 1 when the telephone call is finished, the user rotates the earphone 6 to retract it inward.

That is, when the user pushes a part of the earphone 6 with a hand holding the body 2, the earphone 6 is rotated about the rotating shaft 81. When pushed in parallel with the body 6, the earphone 6 is supported by the support 83. In other words, through the interaction between the stopper 82 and the support 83, the earphone 6 can stably maintain the retracted position against an external force applied thereto.

Similar to the eighth embodiment, when the earphone 6 is completely retracted into a stationary position, the rotation detector 13 on the inside wall of the body 2 is activated. That is, the earphone 6 upon being retracted remains stationary in position due to the interaction between the stopper 82 and the support 83, and at the same time, the rotation detector 13 is activated to automatically terminate the operation of the wireless headset 1.

Such a structure of the wireless headset 1 is expected to be useful when it is attached to a user such as a driver who uses both hands. Since the returning direction enabled by the stopper-side elastic member 85 is toward the extracting position rather than toward the retracting position, the earphone 6 can return to the extracted position even after rotated to a certain degree under an external force applied thereto, except for a case where the earphone 6 is completely rotated to the retracted position and fixed by the support 83,

### Embodiment 10

This embodiment of the invention is substantially the same as the eighth embodiment except for the direction of the rotation of the earphone 6 and the rotation status of the earphone 6. Accordingly, the same parts will not be described but understood with reference to the eighth embodiment. In the drawings, the like reference numerals are used to designate the like elements throughout.

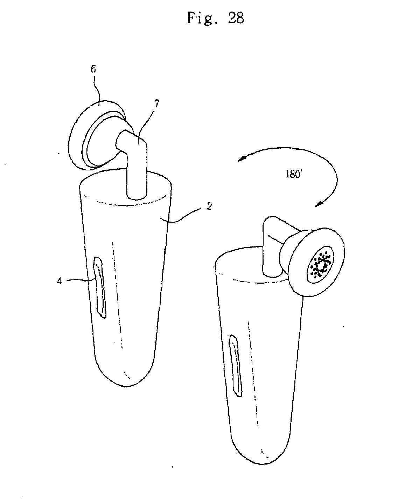

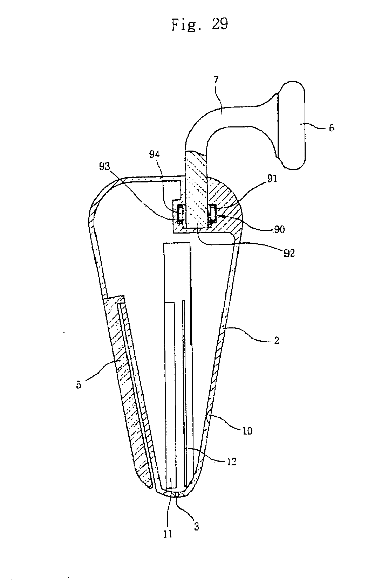

FIG. 28 is a perspective view illustrating the wireless headset according to the tenth embodiment of the invention, and FIG. 29 is a vertical cross-sectional view illustrating the wireless headset according to the tenth embodiment of the invention.

Referring to FIGS. 28 and 29, the wireless headset of this embodiment is substantially the same as the eighth embodiment in that the earphone 6 protrudes from the upper end of the wireless headset. However, the earphone 6 of this embodiment operates to rotate on a rotation plane perpendicular to the longitudinal direction of the wireless headset. This rotation plane is formed in a horizontal direction of FIG. 29. To achieve this operational feature, the body 2 is provided with a recess formed in a horizontal direction (along the rotation plane) and a rotating shaft 73 supported in the recess in a vertical direction parallel to the longitudinal direction of the wireless headset.

The earphone location guide structure provided at a joint between the spacer 7 and the body 2 is similar to a hinge structure for rotating a folder of a folder-type mobile phone. The earphone location guide structure has an elastic hinge 90 at a joint between the spacer 7 and the body 2.

The structure of the elastic hinge 90 will now be described in detail. The elastic hinge 90 of this embodiment includes a hinge body 91 forming an outside case, elastic members 94 loaded on the inside walls of the hinge body 91, a rotation guide 93 having a polygonal cross section, inserted between the elastic members 94, and a rotating shaft 92 for rotating at the same angle as the rotation guide 93 and the spacer 7.

With this structure, the earphone 6 can be rotated horizontally for 360°. That is, when the earphone 6 is rotated, the rotating shaft 92 and the rotation guide 93 are rotated together. The rotation of the rotation guide 93 is controlled by the elastic members 94. That is, since the rotation guide 93 is provided with a polygonal cross section including at least one plane, the elastic members 94 allow the rotating shaft 92 to rotate at an angle corresponding to the plane of the rotation guide 93. In such an operational structure, the plane corresponding to the rotation guide 93 may be preferably formed in a position opposed to the elastic members 94 at least, when the earphone 6 is completely extracted and a position opposed to the elastic members 94 when the earphone 6 is completely retracted.

With this construction, the earphone 6 can be rotated horizontally for 360°, and the user can use the wireless headset by placing the earphone 6 stationary at a desired position.

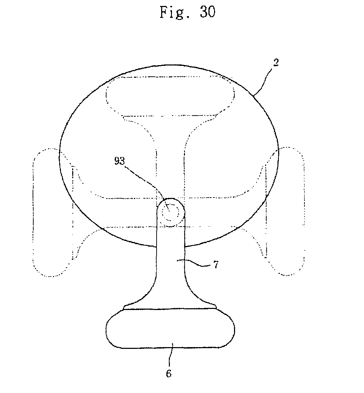

FIG. 30 is a plan view of the wireless headset according to the tenth embodiment of the invention, explaining the range of the rotation of the earphone 6. Referring to FIG. 30, where the earphone 6 is completely rotated toward the inside of the body, that is, the spacer 7 is placed in parallel with the longitudinal direction of the body 2 and the earphone 6 is placed inside the outline of the body 2 (in the plan view), it can be understood that the wireless headset is in a parking position.

On the other hand, where the earphone 6 is completely rotated outward from the body, that is, the spacer 7 is placed parallel with the longitudinal direction of the body 2 and the earphone 6 is placed outside the outline of the body (in plan view), it can be understood that the wireless headset is in use. This is because where the earphone 6 is completely rotated outward from the body, the spacer 7 is located farthest from the body 2, so that there is no fear that the body 2 touches the ear of the user.

This is because when the earphone 6 is located at the center of the rotation range, the gap between the spacer 7 and the body 2 is at the maximum so that the body 2 rarely touches the ear of the user.

With reference to the above structure, the operation and function of this embodiment will be described in more detail.

First, the process of using the wireless headset 1 will be described. The user horizontally rotates the earphone 6 and/or spacer 7, which protrude upward from the body 2 and are directed toward the inside of the body, with a hand in order to use the headset 1. Then, the earphone 6 is rotated about the rotating shaft 83, and when rotated completely outward from the body 2, is kept stationary by the elastic hinge 90.

In the meantime, when the earphone 6 is rotated completely outward from the body 2 as above, the rotation detector 13 placed on the elastic hinge 90 is activated. That is, when the earphone 6 is rotated completely outward from the body 2, the earphone 6 is fixed in position by the elastic hinge 90, and the rotation detector 13 is activated to start the operation of the wireless headset 1.

Likewise to the eighth and ninth embodiments, various sensors may be preferably installed and used. Examples of such sensors may include a sensor for detecting the movement of the rotating shaft 92 and the rotation guide 93 to activate the rotation detector 13 in response to the motion of the elastic hinge 90, or a sensor installed inside the spacer guide recess 9 to detect the movement of the spacer 7. Such a sensor may be activated by detection of the rotation of the earphone 6 in the wireless headset 1, thereby further enhancing the usage of the wireless headset 1, where the earphone 6 is installed to be extracted and retracted from/into the same, while improving the convenience to the user. By using such a sensor, it is possible to control power supplied to the wireless headset merely through the rotation of the earphone 6, thereby improving the usage of the wireless headset 1 and the convenience of the user.

Now the process of terminating the operation of the wireless headset will be described in more detail.

To terminate the operation of the wireless headset 1, the user horizontally rotates with a hand the earphone 6 and/or spacer 7, which protrude upward and are directed outward from the body 2, with a hand. Then, the earphone 6 is rotated about the rotating shaft 83. When the user rotates the earphone 6 completely toward the inside of the body 2, the earphone 6 remains stationary by the elastic hinge 90.

In the meantime, when the earphone 6 is rotated completely toward the inside of the body 2, the earphone 6 is fixed in position by the elastic hinge 90, and at the same time, the rotation detector 13 is activated to terminate the operation of the wireless headset 1.

As an alternative, when the user attempts to keep the wireless headset 1 attached to the ear even after the wireless headset 1 has been turned off, he/she may manually terminate the operation of the wireless headset by manipulating the on/off button 10.

In this embodiment also, as an advantageous effect, according to the rotation angle of the earphone 6, the earphone 6 can remain without movement in stationary positions if at least a present amount of external force is not applied. Furthermore, since the earphone 6 is placed inside the outline of the body 2 in the plan view, when the earphone 6 is rotated completely toward the inside the body 2, an external object rarely contacts the earphone 6 and thus the wireless headset can be easily carried and stored. In addition, since the earphone 6 protrudes from one end of the body 2, the user can conveniently operates the wireless headset with one hand without any difficulty in carrying or storage.

### Embodiment 11

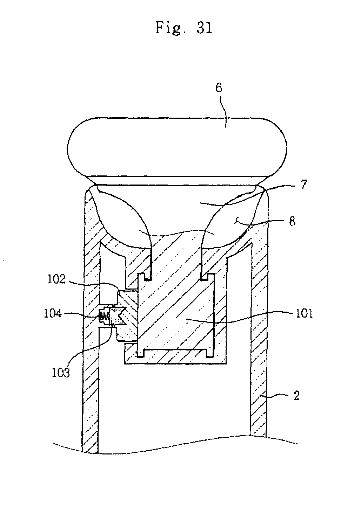

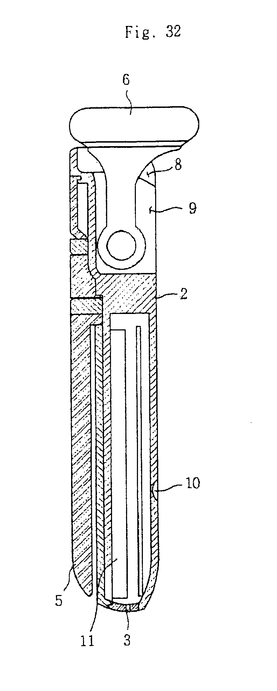

FIG. 31 is a cross-sectional view of a wireless headset according to the eleventh embodiment of the invention, taken along the line II-II' of FIG. 1, and FIG. 32 is a cross-sectional view of the wireless headset according to the eleventh embodiment of the invention, taken along the line I-I' of FIG. 1.

As a characteristic feature of the wireless headset 1 of this embodiment, the earphone 6 can be moved easily, and a construction associated therewith will now be described in detail.

A bar-shaped spacer 7 is arranged at a joint between the earphone 6 and the body 2 to provide a specific magnitude of gap between the earphone 6 and the body 2. The body 2 has an earphone guide recess 8 for guiding the location of the earphone 6 and a spacer guide recess 9 for guiding the location of the spacer 7.

The earphone 6 is rotated with respect to the body 2 to a position as shown in FIG. 6. In this position, the center line C2 of the earphone 6 is tilted with respect to the extension line C1 of the upper surface of the body 2. The angle A between the extension line C1 and the center line C2 is in the range from 5° to 20°, preferably from 10° to 15°. When the earphone 6 rotated about the body 2 is set stationary, the offset B between the underside of the earphone 6 and the upper surface of the body 2 is about 2 mm to 8 mm, preferably 4 mm to 5 mm.

In detail, when the earphone 6 is extracted outward from the wireless headset 1 to be inserted into the ear of the user during the use of the wireless headset 1, the spacer 7 serves to prevent the earphone 6 from being caught by the ear of the user, which would obstruct the insertion of the earphone 6. That is, the spacer 7 maintains a specific gap between the ear of the user and the body 2 when the wireless headset 1 is hung on the ear of the user.

To be specific, the earphone guide recess 8 is depressed in a large width into the body 2 from the end thereof to provide a seating space for the earphone 6 which is retracted to a position adjacent to the body 2 in a parking position of the wireless headset 1.

In addition, the spacer guide recess 9 serves to guide the movement of the spacer 7 while the earphone 6 is extracted from the body 2 for the use of the wireless headset 1 or after the earphone is extracted.

Now more detailed description will be made of a rotator, a flexible portion and a rotation stopper which serve to guide the location of the earphone 6, fix the position of the rotator during the operation of the earphone 6 at least, and prevent the rotation of the rotator against an external force of a preset amount or less.

First, a rotating shaft 101 is arranged at the lower end of the spacer 7, extending perpendicular to the longitudinal direction of the spacer 7, a flexible portion 102 is arranged at one end of the rotating shaft 101, a rotation stopper 103 contacts the flexible portion 102, and an elastic member 104 is further connected to the end of the rotation stopper 103.

With this structure, the rotation stopper 103 is constantly provided with a force directed to the flexible portion 102 from the elastic member 104. The rotation stopper 103 applies a force to the flexible portion 102 to be at a predetermined rotation angle while constantly contacting the flexible portion 102.

To describe in detail, this embodiment provides a similar structure to a ballpoint pen. That is, the flexible portion 102 has a protrusion-indentation structure, and the rotation stopper 103 has a shape conforming to the protrusion-indentation structure of the flexible portion 102. Therefore, when the earphone 6 is rotated toward the rotating shaft 101, the rotation stopper 103 moves along the protrusion-indentation structure, in particular, moves pitch-by-pitch from an indentation to the next one of the protrusion-indentation structure.

To describe the operation of this embodiment, in a position where the flexible portion 102 is aligned with the rotation stopper 103, the rotation stopper 103 is resistant against the rotation of the flexible portion 102. This as a result restrains the flexible portion 102 against an external force of a specific amount or less. In this position, when the earphone 6 is rotated in an extracting or retracting direction under an external force exceeding the specific amount applied thereto, the rotating shaft 101 and the flexible portion 102 are rotated together with the earphone 6 in a stepwise fashion, in particular, by a pitch of the protrusion-indentation structure of the flexible portion 102 in each step.

In other words, the protrusion-indentation structure of the flexible portion 102 and the rotation stopper 103 are aligned with each other only when they are meshed. In addition, the angle of the rotation of the earphone 6 is varied according to the number of the rotation of the flexible portion. According to such a structure, stationary positions of the earphone 6 can be variously provided. This can be more positively applied to a situation where the user wants the earphone 6 placed to be attached to an ear in various positions.

Processes of starting and terminating the operation of the wireless headset 1 will be described in more detail.

In case of using the wireless headset 1 to answer a call to the mobile phone, the user holds the wireless headset 1 and rotates the earphone 6 to extract it. That is, when the user pushes the part of the earphone 6 protruding out of the earphone guide recess 8 while continuously applying a specific amount of external force thereto, the earphone 6 rotates about the rotating shaft 101 through the interaction among the flexible portion 102, the rotation stopper 103 and the elastic member 104. Here, the earphone 6 performs stepwise rotation by a specific angle at each step.

Once the earphone 6 is extracted, the earphone 6 remains stationary at the extracted position under the force acting among the flexible portion 102, the rotation stopper 103 and the elastic member 104 until the user retracts the earphone 6 inward with a force the same as in the extraction. Thus, the earphone 6 can remain correctly at the extracted position without movement when inserted into the ear. As a result, the earphone 6 can be inserted into the ear more precisely and conveniently.

When attempting to retract the earphone 6 inward with the wireless headset 1 not used, the earphone 6 is rotated inward. In order to retract the earphone 6 inward when the operation of the wireless headset 1 is terminated, the user merely rotates the earphone 6 inward. Then, an operation opposite to the extraction is carried out, and thus detailed description thereof will be omitted.

When the earphone 6 is completely extracted, the user can push the on/off button 10 to activate the wireless headset 1. After the call, the user can push the on/off button 10 again to terminate the operation of the wireless headset 1.

Preferably, the headset 1 includes a rotation detector 13 inside the body 2. The rotation detector 13 detects the extracted position of the earphone 6 so that the headset 1 starts or terminates operation. For this purpose, various sensors may be installed and used, examples of which include a sensor for detecting the movement of the flexible portion 102 and/or the rotation stopper 103, and a sensor installed inside the spacer guide recess 9 to detect the movement of the spacer 7. Such a sensor may be activated by detection on the rotation of the earphone 6 in the wireless headset 1, thereby further enhancing the usage of the wireless headset 1, where the earphone 6 is installed to be extracted and retracted from/into the same, while improving user convenience.

As explained briefly in the above description, the earphone 6 in the parking position is extended along the longitudinal direction of the body 2. On the other hand, in the operating position, the earphone 6 is bent with respect to the longitudinal direction of the body 2, that is, rotated from the body 2 to be folded onto the body 2. Then, the earphone 6 is moved farther away from the body 2, and as an advantageous result, the interference between the user's ear and the body 2 is further reduced.

While not described in detail, any electrical connector structure such as an FPCB may of course be provided to connect the earphone 6 with the board 12 in order to transfer electric signals to the earphone 6.

The microphone 3 is arranged in the lower part of the wireless headset 1, which is closest to the mouth of the user, in order to effectively sense the user's voice.

According to this embodiment of the invention, the earphone 6 is configured to extend from one end of the wireless headset 1 along the longitudinal direction of the headset 1 and to rotate to be folded about the headset 1. This results in merits of improved structural convenience. Furthermore, since the earphone 6 is not installed in an inner space of the wireless headset 1, there are merits of improving convenience in the installation of internal components of the body 2 and promoting the spatial efficiency thereof. There are other merits of enabling the miniaturization of the wireless headset 1 while facilitating the portability and storage thereof. Moreover, since the power supplied to the wireless headset 6 is automatically controlled merely through the extraction and retraction of the earphone 6, the user can more simply and easily use the wireless headset 6.

### Embodiment 12

This embodiment of the invention is substantially the same as the eleventh embodiment except that a location guide structure for the earphone has different features. Accordingly, the same parts will not be described but understood with reference to the eleventh embodiment. In the drawings, the like reference numerals are used to designate the like elements throughout.

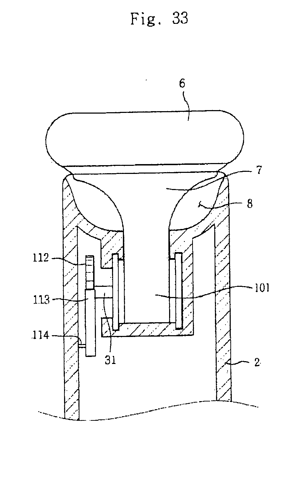

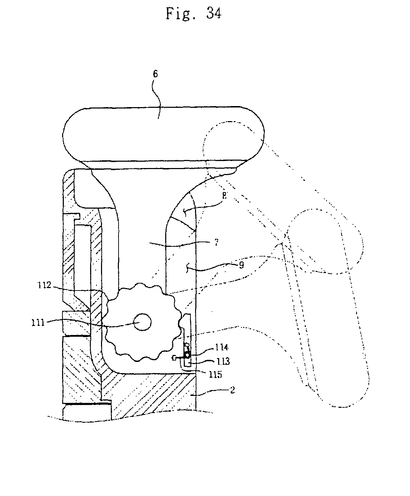

FIGS. 33 and 34 are vertical cross-sectional views illustrating a wireless headset according to a twelfth embodiment of the invention, in which the cross section of the wireless headset is cut at the same angle as in FIGS. 31 and 32.

Referring to FIGS. 33 and 34, the earphone location guide structure of this embodiment including a rotating portion, a flexible portion and a rotation stopper has a similarity to a gear and a ratchet. That is, the earphone locating guide structure includes a rotating shaft 111 arranged at the lower end of the spacer 7, a gear 112 arranged at one end of the rotating shaft 111 to rotate coaxially with the rotating shaft 111, a ratchet 113 meshed with the gear 112 to control the rotation of the gear 112, a ratchet shaft 114 supporting the ratchet 113, and a ratchet-side elastic member 115 for applying an elastic force to the rotational position of the ratchet 113.

To describe in detail, the rotating shaft 111 and the gear 112 are parts that rotate coaxially, and the gear 112 is composed of a number of projections and indentations which are inclined smoothly. The ratchet 113 is shaped to mesh into the indentations of the gear 112, and placed to be parallel with the longitudinal direction of the body 2. The ratchet shaft 114 and the ratchet-side elastic member 115 apply a specific elastic force to the ratchet 113 to maintain this position.

According to the above described structure, the ratchet elastic member 115 constantly provides the ratchet 113 with a centripetal force directed to the center the gear 112, and the ratchet 113 keeps contacting the gear 112 while forcing the gear to be oriented at a specific rotation angle.

To describe the operation of this embodiment, where the ratchet 113 is meshed into the indentations of the gear 112, the ratchet 113 is resistant against the rotation of the gear 112. Then, under an external force of a specific amount or less, the gear 112 is restrained from rotating. In this position, when the earphone 6 is rotated to be extracted or retracted under an external force exceeding the specific amount, the rotating shaft 111 and the gear 112 are rotated along with the earphone 6 in a stepwise fashion, in particular, by one pitch of the gear 112 at each step.

In other words, according to this embodiment, stationary positions are stabilized whenever each indentation of the gear 112 is aligned with the ratchet 113 during the rotation of the gear 112. This as a result produces various angles of stationary positions. Then, the user can select various earphone positions according to his/her preference.

Likewise to the eleventh embodiment, a rotation detector 13 for detecting the retracted position of the earphone 6 may be arranged inside the body 2. With the rotation detector 13, the wireless headset 1 can be automatically turned on and/or off, thereby enhancing the convenience of the user.

### Embodiment 13

This embodiment of the invention is substantially the same as the eleventh embodiment except that a location guide structure for the earphone has different features. Accordingly, the same parts will not be described but understood with reference to the eleventh embodiment. In the drawings, the like reference numerals are used to designate the like elements throughout.

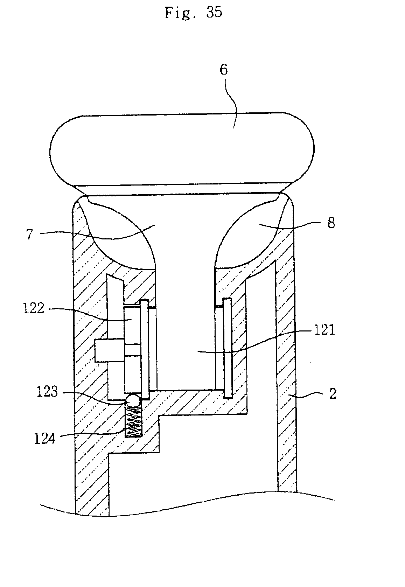

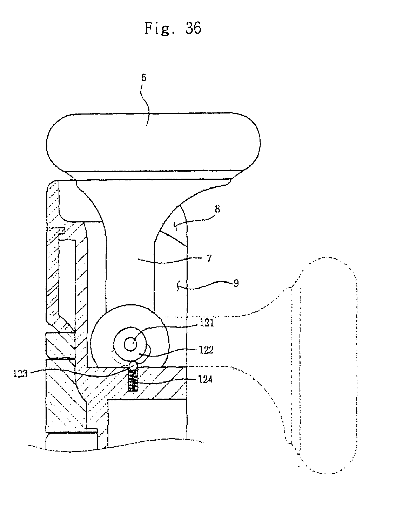

FIGS. 35 and 36 are vertical cross-sectional views illustrating a wireless headset according to a thirteenth embodiment of the invention, in which the cross section of the wireless headset is cut at the same angle as in FIGS. 31 and 32.

Referring to FIGS. 35 and 36, the earphone location guide structure of this embodiment includes a rotating shaft 121 arranged at the lower end of the spacer 7 perpendicularly to the longitudinal direction of the spacer 7, a flexible portion 122 arranged at one side of the rotating shaft 121 to rotate coaxially with the rotating shaft 121, a rotation stopper 123 interacting with the flexible portion 122 to control the rotation of the flexible portion 122, and an elastic member 124 connected to the rotation stopper 123.

To describe in detail, this structure is similar to a cam, in which the elastic member 124 constantly imparts an upward force to the rotation stopper 123, and the upper end of the rotation stopper 123 forces the flexible portion 122 into a specific rotation angle while staying in constant contact with the same. Then, in response to the rotation of the earphone 6, the flexible portion 122 is rotated via the rotating shaft 121. The flexible portion 122 is shaped similar to a non-circular cam, but has two indentations. The flexible portion 122 is pushed upward by the rotation stopper 123 to provide a force enabling the earphone to move to a predetermined position.

The earphone 6 remains stable through the interaction between the flexible portion 122 and the rotation stopper 123 in specific positions. In one position, the earphone 6 is received in the earphone guide recess 8 with the wireless headset 1 in use. In another position, the earphone 6 is extracted out completely with the wireless headset 1 not in use. In an intermediate position, the flexible portion 122 is unstably placed and thus provides a force to rotate in either direction.

Now the operation of the wireless headset 1 of this embodiment will described in detail

When the user attempts to use the wireless headset 1, he/she rotates the earphone 6 to extract it. To describe this process in more detail, the user pushes a part of the earphone 6 protruding out of the earphone guide recess 8 with a hand holding the body 2. This rotates the earphone 6 about the rotating shaft 121, which then extracts out through the interaction between the he flexible portion 122 and the rotation stopper 123.

Since the earphone 6 can be extracted out swiftly and simply as above when the user additionally applies a specific amount of external force, there is an advantage in that the convenience to the user can be further improved. Once extracted out, the earphone 6 remains stationary in the extracted position under a force acting between the flexible portion 122 and the rotation stopper 123, until the user pushes the earphone 6 inward with a force the same as that exerted for the extraction of the earphone 6.

With this structure, the user can easily carry the earphone 6 and stably use the headset 1 regardless of a certain amount of external force being applied to the wireless headset during the operation of the earphone 6.

Likewise to the eleventh embodiment, a rotation detector 13 for detecting the retracted position of the earphone 6 may be arranged inside the body 2. With the rotation detector 13, the wireless headset 1 can be automatically turned on/off, thereby enhancing the convenience of the user.

### Embodiment 14

This embodiment of the invention is substantially the same as the thirteenth embodiment except that a location guide structure for the earphone has different features. Accordingly, the same parts will not be described but understood with reference to the thirteenth embodiment. In the drawings, the like reference numerals are used to designate the like elements throughout.

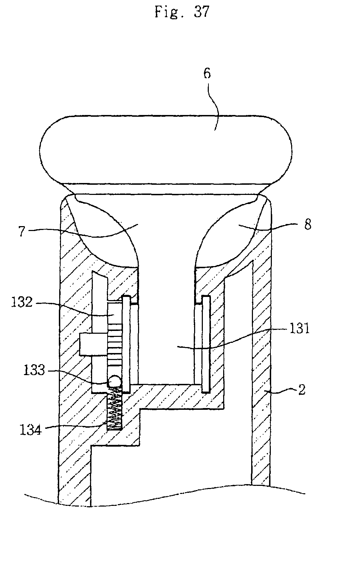

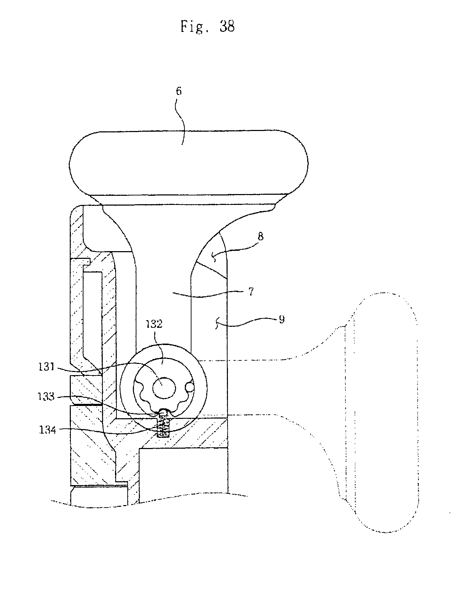

FIGS. 37 and 38 are vertical cross-sectional views illustrating a wireless headset according to a fourteenth embodiment of the invention, in which the cross section of the wireless headset is cut at the same angle as in FIGS. 35 and 36.

Referring to FIGS. 37 and 38, the earphone location guide structure of this embodiment includes a rotating shaft 131 arranged at the lower end of the spacer 7, a flexible portion 132 arranged at one side of the rotating shaft 131 to rotate coaxially with the rotating shaft 131, a rotation stopper 133 for interacting with the flexible portion 132 to control the rotation of the flexible portion 132 and an elastic member 134 connected to the rotation stopper 133.

Now the construction and operation of this embodiment will be described in detail with an emphasis on the flexible portion 132 which shows different features from the thirteenth embodiment.

The flexible portion 132 can be understood as a combination of the gear structure of the twelfth embodiment and the cam structure with two indentations of the thirteenth embodiment. That is, the flexible portion 132 is shaped similar to a non-circular cam, in which indentations are formed with a uniform pitch in an area of the flexible portion 132 corresponding to the range of the rotation of the earphone 6. Two outermost indentations placed at both ends correspond to positions where the earphone 6 is extracted and retracted completely in the range of the rotation of the earphone 6. The outermost indentations are more deeply depressed than the other indentations in order to positively lock the extracted and retracted positions.

Other than the flexible portion 132, other components of this embodiment which include the rotating shaft 131, the rotation stopper 133 and the elastic member 134 have the same structure and function as the foregoing thirteenth embodiment. That is, the elastic member 124 constantly imparts an upward force to the rotation stopper 123, and the upper end of the rotation stopper 123 forces the flexible portion 122 into a specific rotation angle while constantly contacting the same. Then, in response to the rotation of the earphone 6, the flexible portion 122 is rotated via the rotating shaft 121. The flexible portion 122 is shaped similar to a non-circular cam, but has two indentations. The flexible portion 122 is pushed upward by the rotation stopper 123 to provide a force enabling the earphone to move to a predetermined position.

To describe the operation of this embodiment, in a position where the flexible portion 132 is meshed with the rotation stopper 133, the rotation stopper 133 is resistant against the rotation of the flexible portion 132 so that the flexible portion 132 is restrained from rotating under an external force of a specific amount or less applied thereto. When the earphone 6 is rotated from this position toward the extraction or retraction position under an external force exceeding the specific amount applied thereto, the rotating shaft 131 and the flexible portion 132 are rotated in a stepwise fashion, in particular, by one pitch of the gear 112 at each step.

Since the angle of the rotation of the earphone 6 is varied according to the position of the flexible portion 132 meshing with the rotation stopper 133, more stationary positions of the earphone 6 can be provided and the earphone 6 can remain stationary in more various positions. Accordingly, the user can select various desirable positions, which are supported by the flexible portion 132 and the rotation stopper 133. As a result, more stable usage can be enabled.

According to the present invention as described hereinbefore, the wireless headset can operate stably and normally while remaining stably at a designated position with a given structure even under an accidental external impact applied thereto.

In addition, the wireless headset is reduced in size and manufacturing cost and the inner space of the wireless headset can be utilized more efficiently.

Furthermore, the wireless headset can be easily carried, and the user can more easily use the wireless headset by manipulating the earphone with the fingers of a hand holding the bar-shaped body.

Moreover, power supplied to the wireless headset is controlled through the extraction/retraction of the earphone, such that the wireless headset can be used more easily, conveniently and promptly.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A wireless headset comprising:
an elongated bar-shaped body;
an earphone rotatably arranged at an upper or lower end of the body; and
an earphone location guide structure for maintaining the earphone stationary with respect to the body in at least one position selected from the group consisting of an extracted position, a retracted position and an intermediate position between the extracted and retracted position.

2. The wireless headset according to claim 1, wherein the earphone location guide structure comprises an elastic hinge arranged between the body and the earphone.

3. The wireless headset according to claim 1, further comprising a spacer arranged between the earphone and the body, the spacer enabling the earphone in the extracted position to have a greater distance from the body than in the retracted position.

4. The wireless headset according to claim 1, wherein the earphone is inserted partially into an earphone guide recess which is depressed into the body from outside.

5. The wireless headset according to claim 1, wherein the earphone is extracted vertically or horizontally with respect to a longitudinal direction of the body.

6. The wireless headset according to claim 1, further comprising a flexible portion arranged at a joint between the earphone and the body, the flexible portion being deformable elastically.

7. The wireless headset according to claim 1, wherein in a stationary position of the earphone rotated from the body, a central line of the earphone is tilted at an angle ranging from 5° to 20° with respect to an extension line of an upper surface of the body.

8. The wireless headset according to claim 1, wherein when the earphone is rotated from the body to a stationary position, an offset between an underside of the earphone and an upper surface of the body ranges from 2 mm to 8 mm.

9. A wireless headset comprising:
a body;
an earphone guide recess depressed into the body from outside;
an earphone arranged in the earphone guide recess, rotatably in a direction to be folded with respect to the body, so as to be extracted out;
an earphone location guide structure for keeping the earphone stationary in at least one of a position extracted from the body and another position retracted into the body; and
a spacer for enabling the earphone to remain separated from the body in the extracted position.

10. A wireless headset comprising:
a bar-shaped body;
an earphone guide recess depressed into the body from outside;
an earphone placed in the earphone guide recess;
an elastic hinge arranged at a joint between the earphone and the body to provide an elastic force to a rotating position of the earphone, thereby keeping the earphone stationary in an extracted position at least; and
a spacer for enabling the earphone to remain separated from the body in the extracted position.

11. The wireless headset according to claim 10,
wherein the elastic hinge comprises:
a rotating shaft providing a central axis for rotation of the earphone;
a cam coaxially rotatable with the rotation axis;
a stud contacting the cam; and
an elastic member for providing an elastic force for pushing the stud upward.

12. A wireless headset comprising:
a body;
an earphone rotatable with respect to the body, so as to be extracted out;
an earphone location guide structure for keeping the earphone stationary with respect to the body; and
a clip coupled with the body, for enabling the body to be hung.

13. A wireless headset comprising:
a body;
an earphone guide recess depressed into the body;
an earphone arranged in the earphone guide recess, rotatably in a direction to be folded with respect to the body, so as to be extracted out;
a spacer for enabling the earphone in an extracted position to remain separated from the body;
a rotating shaft arranged at an end of the spacer;
a rotation guide rotatable together with the rotating shaft, the rotation guide having a polygonal cross section including at least one planar portion; and
an elastic member for providing an elastic force to rotate the rotation guide in a direction, so as to come into surface contact with the planar portion of the rotation guide.

14. A wireless headset comprising:
a body;
an earphone guide recess depressed in the body;
an earphone arranged in the earphone guide recess, rotatably with respect to the body, so as to be extracted out;
a spacer for enabling the earphone in an extracted position to remain separated from the body;
a rotating shaft arranged at an end of the spacer;
a guide plate rotating at the same angle as the rotating shaft;
at least one stopper arranged equidistantly with a center of the guide plate;
an insert piece for being selectively caught by the stoppers; and
an elastic member for pressing the insert piece toward the stopper.

15. The wireless headset according to claim 14, further comprising stoppers arranged in positions which correspond to the extracted position and a retracted position of the earphone and to at least one position between the extracted and retracted positions.

16. A wireless headset comprising:
a body;
an earphone guide recess depressed into the body;
an earphone arranged in the earphone guide recess, rotatably with respect to the body, so as to be extracted out;
a spacer for enabling the earphone to remain separated from the body in the extracted position;
a rotating shaft rotatable together with the spacer;
a rotation guide having at least one planar portion rotatable together with the rotating shaft; and
an elastic piece made of resin and provided integrally with a part of the body, the elastic piece providing an elastic force to rotate the rotation guide in a direction to be in surface contact with the planar portion of the rotation guide.

17. A wireless headset comprising:
a body;
an earphone guide recess depressed in the body;
an earphone arranged in the earphone guide recess, rotatably with respect to the body to be extracted out;
a spacer for enabling the earphone in an extracted position to remain separated from the body; and
a flexible portion made of an elastic material, the flexible portion formed at a joint between the earphone and the body by double injection with respect to the body,
wherein the flexible portion is smoothly curved to guide extraction of the earphone when the earphone is extracted out.

18. The wireless headset according to claim 17, wherein the body has a constricted portion defining a protrusion for catching the spacer or flexible portion at the extraction of the earphone to maintain the earphone in the extracted position.

19. A wireless headset comprising:
a bar-shaped body;
an earphone rotatable in a direction crossing a longitudinal direction of the body;
a spacer arranged at a joint between the earphone and the body, the spacer enabling the earphone in an extracted position to maintain separated from the body; and
an earphone location guide structure for maintaining the earphone in the extracted position at least.

20. A wireless headset comprising:
a body;
an earphone rotatable with respect to the body, so as to be extracted out;
a spacer for enabling the earphone in an extracted position to remain separated from the body; and
an elastic hinge for enabling the earphone to rotate in a range of 180° and to remain stationary in the extracted potion at least.

21. A wireless headset comprising:
bar-shaped a body;
an earphone guide recess formed in a cross section corner of the body;
an earphone received in the earphone guide recess;
a spacer connected to a joint between the earphone and the body, the spacer enabling the earphone in an extracted position to remain separated from the body; and
an earphone location guide structure for keeping the earphone stationary in the extracted position.

22. A wireless headset comprising:
a body mounted with a Bluetooth module at least;
an earphone guide recess depressed into the body from outside;
an earphone partially guided and placed inside the earphone guide recess; and
an earphone location guide structure for keeping the earphone stationary with respect to the body in at least one of an extracted position and a retracted position,
wherein the earphone guide recess supports the earphone to prevent the earphone from excessive rotation.

23. A wireless headset comprising:
a body;
an earphone rotatable with respect to the body, and extractable perpendicularly or horizontally with respect to a longitudinal direction of the body;
an earphone location guide structure for maintaining the earphone stationary in at least one of a position extracted from the body and another position retracted into the body; and
a rotation detector for detecting an operation of at least one of the earphone and the earphone location guide structure to control power supplied to the wireless headset.

24. The wireless headset according to claim 23, wherein the earphone location guide structure comprises an elastic hinge arranged at a joint between the body and the earphone.

25. A wireless headset comprising:
a body;
an earphone having a shape protruding from an end of the body, and arranged rotatable with respect to the body;
a spacer for enabling the earphone to remain separated from the body in an extracted position;
a stopper formed in the spacer, and enabling the earphone in at least one of the extracted position and a retracted position to remain stationary;
a support for interacting with the stopper to support the stopper in order to keep the earphone stationary in at least one of the extracted position and the retracted position;
an extraction/retraction operator for removing a supporting force from the support, which supports the earphone in at least one of the extracted position and the retracted position, to return the earphone from the extracted position or the retracted position to the retracted position or the extracted position; and
a stopper-side elastic member arranged at a joint between the earphone and the body to provide an elastic force to a rotating position of the earphone in order to return the earphone from the extracted position or the retracted position to the retracted position or the extracted position.

26. The wireless headset according to claim 25, further comprising a rotation controller for detecting an operation of the earphone to control power supplied to the wireless headset.

27. A wireless headset comprising:
a body;
an earphone rotatable perpendicular to a longitudinal direction of the body;
a spacer for enabling the earphone in a retracted position to remain separated from the body;
a rotating shaft arranged at an end of the spacer;
a rotation guide rotatable together with the rotating shaft, and having a polygonal cross section including at least one planar portion; and
an elastic member for providing an elastic force to rotate the rotation guide in a direction to be in surface contact with the planar portion of the rotation guide.

28. The wireless headset according to claim 27, further comprising a rotation controller for detecting an operation of at least one of the earphone and an earphone location guide structure to control power supplied to the wireless headset.

29. A wireless headset comprising:
a body;
an earphone rotatable with respect to the body;
a spacer arranged between the earphone and the body, the spacer enabling the earphone in the extracted position to have a greater distance from the body than in the retracted position;
a rotator connected to the earphone to rotate together with the earphone;
a flexible portion connected to the rotator, and having at least two indentations; and
a rotation stopper for interacting with the flexible portion to keep the earphone stationary while the earphone is being used in order to prevent rotation of the rotator.

30. The wireless headset according to claim 29, wherein the earphone is partially inserted into an earphone guide recess formed in an exterior of the body.

31. The wireless headset according to claim 30, wherein the earphone is retracted vertically or horizontally with respect to a longitudinal direction of the body.

32. The wireless headset according to claim 30, further comprising a rotation detector for detecting an operation of at least one of the earphone and the rotator to control power supplied to the wireless headset.

33. A wireless headset comprising:
a body;
an earphone movable with respect to the body;
a spacer for enabling the earphone to remain separated from the body in an extracted position;
a rotating shaft connected to the earphone to move together with the earphone;
a flexible portion having a protrusion-indentation structure, and formed on one side of the rotating shaft,
a protruding rotation stopper for meshing with the protrusion-indentation structure of the flexible portion to prevent rotation of the rotating shaft; and
an elastic member for providing the rotation stopper with an elastic force toward the flexible portion.

34. The wireless headset according to claim 33, further comprising a rotation detector for detecting an operation of at least one of the earphone and the rotating shaft to control power supplied to the wireless headset.

35. A wireless headset comprising:
a body;
an earphone movable with respect to the body;
a spacer for enabling the earphone to remain separated from the body in an extracted position;
a rotating shaft connected to the earphone to rotate together with the earphone;
a flexible portion shaped into a gear, and arranged at a portion of the rotating shaft;
a ratchet for meshing with the gear of the flexible portion to prevent rotation of the rotating shaft;
a ratchet shaft for supporting the ratchet; and
an elastic member for providing an elastic force to a rotating position of the ratchet.

36. The wireless headset according to claim 35, further comprising a rotation detector for detecting an operation of at least one of the earphone and the rotating shaft to control power supplied to the wireless headset.

37. A wireless headset comprising:
a body;
an earphone movable with respect to the body;
a spacer for enabling the earphone to remain separated from the body in an extracted position;
a rotating shaft connected to the earphone to move together with the earphone;
a non-circular flexible portion arranged at a portion of the rotating shaft, and having at least two indentations;
a rotation stopper meshed with at least one of the indentations to prevent rotation of the rotating shaft; and
an elastic member for providing an elastic force so that the rotation stopper maintains an initial position.

38. The wireless headset according to claim 37, wherein the indentations of the flexible portion are formed in positions corresponding to the extracted position and a retracted position, respectively, or in at least three positions corresponding to a rotation range of the earphone.

39. The wireless headset according to claim 37, further comprising a rotation detector for detecting an operation of at least one of the earphone and the rotating shaft to control power supplied to the wireless headset.

40. A control method of a wireless headset, comprising steps of:
at an earphone, being extracted;
detecting the extraction of the earphone to activate a rotation detector; and
switching the wireless headset to a connection mode by the rotation detector.

41. A control method of a wireless headset, comprising steps of:
at an earphone, being retracted;
detecting the retraction of the earphone to activate a rotation detector; and
switching the wireless headset to a standby mode by the rotation detector.
